(19) **Europäisches Patentamt European Patent Office Office européen des brevets**

(11) **EP 4 668 206 A1**

(12) **EUROPEAN PATENT APPLICATION**
published in accordance with Art. 153(4) EPC

(43) Date of publication:
**24.12.2025 Bulletin 2025/52**

(51) International Patent Classification (IPC):
***G06T 5/00*** (2024.01)

(21) Application number: **24855423.0**

(52) Cooperative Patent Classification (CPC):
**G06T 5/70; G06T 5/60;** G06T 2207/20081;
G06T 2207/20084

(22) Date of filing: **17.06.2024**

(86) International application number:
**PCT/CN2024/099588**

(87) International publication number:
**WO 2025/039694 (27.02.2025 Gazette 2025/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **21.08.2023 CN 202311058643**

(71) Applicant: **Tencent Technology (Shenzhen) Company Limited**
**Shenzhen, Guangdong 518057 (CN)**

(72) Inventors:
• **LUO, Feng**
  **Shenzhen, Guangdong 518057 (CN)**
• **XIANG, Jinxi**
  **Shenzhen, Guangdong 518057 (CN)**
• **ZHANG, Jun**
  **Shenzhen, Guangdong 518057 (CN)**

(74) Representative: **Nederlandsch Octrooibureau**
**P.O. Box 29720**
**2502 LS The Hague (NL)**

(54) **IMAGE ENHANCEMENT METHOD AND APPARATUS, ELECTRONIC DEVICE, COMPUTER-READABLE STORAGE MEDIUM, AND COMPUTER PROGRAM PRODUCT**

(57) The present application provides an image enhancement method and apparatus, an electronic device, a computer-readable storage medium, and a computer program product, which can be applied to various scenarios such as cloud technology, artificial intelligence, intelligent traffic and assisted driving. The method comprises: acquiring a latent variable of an object image to be enhanced, and adding noise to the latent variable to obtain a noisy latent variable of the object image, the object image being an image of a target object; extracting object structure features of the target object in the object image; on the basis of the object structure features, denoising the noisy latent variable to obtain a denoised latent variable of the object image; and on the basis of the denoised latent variable, performing image reconstruction to obtain a first object enhanced image of the object image.

FIG. 3

**Description**

RELATED APPLICATION

This application is filed based upon and claims priority to Chinese Patent Application No. 2023110586437, filed on August 21, 2023, which is hereby incorporated by reference in its entirety.

FIELD OF THE TECHNOLOGY

The present disclosure relates to the field of artificial intelligence technologies, and in particular, to an image enhancement method and apparatus, an electronic device, a computer-readable storage medium, and a computer program product.

BACKGROUND OF THE DISCLOSURE

Artificial intelligence (AI) is a comprehensive technology in computer science, and studies design principles and implementation methods of various intelligent machines, to enable the machines to have functions of perception, reasoning, and decision-making. An artificial intelligence technology is a comprehensive subject, and relates to a wide range of fields, for example, several major directions like a natural language processing technology and machine learning/deep learning. As technologies develop, the artificial intelligence technology is applied to more fields with an increasingly important value.

Image enhancement is also an important application direction of artificial intelligence. In the related art, image enhancement of an object image (for example, a character sketch) is usually performed by gradually adding noise to the object image until the object image becomes a complete random noise image, and then gradually removing the noise starting from the random noise image, to obtain a final enhanced object image. However, because a denoising intensity in a denoising process is difficult to control, the final enhanced object image is prone to a loss of a large quantity of original features, resulting in poor enhancement effects of the enhanced object image.

SUMMARY

Embodiments of the present disclosure provide an image enhancement method and apparatus, an electronic device, a computer-readable storage medium, and a computer program product, to improve image enhancement effects on an object image.

Technical solutions of the embodiments of the present disclosure are implemented as follows.

An embodiment of the present disclosure provides an image enhancement method, applied to an electronic device and including:

obtaining a latent variable of a to-be-enhanced object image, and adding noise to the latent variable to obtain a noisy latent variable of the object image, the object image being an image of a target object;

extracting an object structural feature of the target object in the object image;

denoising the noisy latent variable with reference to the object structural feature, to obtain a denoised latent variable of the object image; and

performing image reconstruction on the denoised latent variable to obtain a first enhanced object image of the object image.

An embodiment of the present disclosure further provides an image enhancement apparatus, including:

an obtaining module, configured to: obtain a latent variable of a to-be-enhanced object image, and add noise to the latent variable to obtain a noisy latent variable of the object image, the object image being an image of a target object;

an extraction module, configured to extract an object structural feature of the target object in the object image;

a denoising module, configured to denoise the noisy latent variable with reference to the object structural feature, to obtain a denoised latent variable of the object image; and

a reconstruction module, configured to perform image reconstruction on the denoised latent variable to obtain a first enhanced object image of the object image.

An embodiment of the present disclosure further provides an electronic device, including:

a memory, configured to store computer-executable instructions; and
a processor, configured to implement the image enhancement method provided in the embodiments of the present disclosure when executing the computer-executable instructions stored in the memory.

An embodiment of the present disclosure further provides a computer-readable storage medium, having computer-executable instructions or a computer program stored therein. The computer-executable instructions or the computer program, when executed by a processor, causes the image enhancement method provided in the embodiments of the present disclosure to be implemented.

An embodiment of the present disclosure further provides a computer program product, including computer-executable instructions or a computer program. The computer-executable instructions or the computer program, when executed by a processor, causes the image enhancement method provided in the embodiments of the present disclosure to be implemented.

The embodiments of the present disclosure have the following beneficial effects.

With the application of the foregoing embodiments of the present disclosure, first, the latent variable of the to-be-enhanced object image is obtained, and noise is added to the latent variable to obtain the noisy latent variable of the object image. Then, the object structural feature of the target object in the object image is extracted. Therefore, the noisy latent variable is denoised with reference to the object structural feature, to obtain the denoised latent variable of the object image. Finally, image reconstruction is performed on the denoised latent variable to obtain the first enhanced object image of the object image. Herein, control based on the object structural feature of the object image is added to denoising of the noisy latent variable during image enhancement of the object image, that is, the noisy latent variable is denoised with reference to the object structural feature, so that a loss of the object structural feature of the object image can be reduced during denoising. Therefore, a finally obtained enhanced object image can retain more object structural features of the object image, improving image enhancement effects on the object image.

BRIEF DESCRIPTION OF THE DRAWINGS

FIG. 1 is a schematic diagram of an architecture of an image enhancement system according to an embodiment of the present disclosure.

FIG. 2 is a schematic diagram of a structure of an electronic device according to an embodiment of the present disclosure.

FIG. 3 is a schematic flowchart of an image enhancement method according to an embodiment of the present disclosure.

FIG. 4 is a schematic flowchart of an image enhancement method according to an embodiment of the present disclosure.

FIG. 5 is a schematic diagram of processing of a structural fusion model according to an embodiment of the present disclosure.

FIG. 6 is a schematic diagram of a structure of an image enhancement model according to an embodiment of the present disclosure.

FIG. 7 is a schematic diagram of a structure of an image generative diffusion model according to an embodiment of the present disclosure.

FIG. 8 is a schematic flowchart of an image enhancement method according to an embodiment of the present disclosure.

FIG. 9 is a schematic diagram of controlling denoising by using an object structural feature according to an embodiment of the present disclosure.

FIG. 10 is a schematic diagram of an image super-resolution model according to an embodiment of the present disclosure.

FIG. 11 is a schematic diagram of an image mask of a tile according to an embodiment of the present disclosure.

FIG. 12 is a schematic diagram of displaying an enhanced object image according to an embodiment of the present disclosure.

DESCRIPTION OF EMBODIMENTS

To make the objectives, technical solutions, and advantages of the present disclosure clearer, the following describes the present disclosure in further detail with reference to the accompanying drawings. The described embodiments are not to be considered as a limitation on the present disclosure. All other embodiments obtained by a person of ordinary skill in the art without creative efforts shall fall within the protection scope of the present disclosure.

In the following descriptions, related "some embodiments" describe a subset of all possible embodiments. However, the "some embodiments" may be the same subset or different subsets of all the possible embodiments, and may be combined with each other without conflict.

The term "first/second/third" involved in the following descriptions is merely used to distinguish between similar objects and does not indicate a specific order of the objects. A specific order or sequence indicated by the term "first/second/third" can be changed where permitted, so that the embodiments of the present disclosure described herein can be implemented in an order other than that illustrated or described herein.

Unless otherwise defined, meanings of all technical and scientific terms used in the embodiments of the present disclosure are the same as those usually understood by a person skilled in the technical field of the present disclosure. Terms used in the embodiments of the present disclosure are merely intended to describe objectives of the embodiments of the present disclosure, but are not intended to limit the present disclosure.

Before the embodiments of the present disclosure are further described in detail, descriptions are made on nouns and terms in the embodiments of the present disclosure, and the nouns and terms in the embodiments of the present disclosure are applicable to the following explanations.

(1) Client: is an application that is run on a terminal for providing various services, for example, a client supporting image enhancement.

(2) In response to: is used to indicate a condition or status upon which to-be-performed operations depend, where one or more of the to-be-performed operations may be real-time or may have a set delay when the condition or status upon which the operations depend is satisfied. Without being specifically stated, there is no limitation on an execution sequence of the plurality of to-be-performed operations.

(3) U-Net model: is an algorithm for performing semantic segmentation by using a fully convolutional network.

(4) Attention mechanism: is a problem-solving method proposed by imitating human attention, and means quickly screening out high-value information from a large amount of information. The attention mechanism is mainly used to solve a problem that it is difficult to obtain a proper vector representation when an input sequence of a time sequence model is long, by retaining an intermediate result of the time sequence model, learning the intermediate result by using a new model, and associating the intermediate result with an output, thereby achieving a purpose of information screening.

(5) Latent variable: may also be referred to as a latent variable or a latent variable. Compared with an observed variable, the latent variable is a random variable that cannot be directly observed. The latent variable may be inferred based on observed data by using a mathematical model. The mathematical model for explaining the observed variable by using the latent variable is referred to as a latent variable model. In machine learning, although the latent variable is a variable that cannot be directly observed, the latent variable explains a behavior or characteristic of observable data to some extent. The latent variable model assumes that the observed data is generated by using the latent variable, but the latent variable is unobservable. A value of the latent variable can be inferred by analyzing the observed data.

(6) Receptive field: In machine learning, particularly in deep learning, the receptive field is a part of input data that a neuron or a group of neurons in a neural network can affect. The receptive field is an important concept because it determines which features of the input data can be detected by a feature detector (that is, the neuron) in the neural network. In a convolutional neural network, the receptive field is usually related to a size and a stride of a filter. The filter slides on an input image (that is, performs a convolution operation), where each step of sliding covers a new region on the image, and the region is the receptive field of the filter. As a network depth increases, a size of the filter usually increases, and therefore, the receptive field also correspondingly increases. The importance of the receptive field lies in that the receptive field determines a size and a location of a feature that can be captured by a model. The receptive field is a key concept in deep learning, and directly affects which features can be learned by the model from the input data and how these features affect performance of the model in a particular task.

(7) Encoding: In artificial intelligence, encoding means converting input data into a form more suitable for processing, usually a numerical representation, so as to perform analysis and learning by using a machine learning algorithm. In an encoding process, original data may be directly converted into a number, or data may be abstracted and simplified to create a more compact and useful representation.

(8) Decoding: In artificial intelligence, decoding usually means converting data in a specific format into another format that can be understood or operated. A decoding process may relate to various types of data, including a text, an image, audio, and the like. In machine vision, decoding may relate to converting image data into a recognizable object, scene, or emotion status. For example, the image is encoded by using a convolutional neural network, and then an encoded image feature is converted back to original image data by using a decoder (for example, a decoder in a generative adversarial network). In conclusion, decoding is a key concept in artificial intelligence, and relates to converting a complex numerical representation into a data format that is easier to understand and operate. A purpose of decoding is to extract useful information from input data and convert the useful information into a task that can be understood and executed by a machine.

Based on the foregoing descriptions of the nouns and terms in the embodiments of the present disclosure, the following describes the embodiments of the present disclosure in detail. The embodiments of the present disclosure provide an image enhancement method and apparatus, an electronic device, a computer-readable storage medium, and a computer program product, to improve image enhancement effects on an object image.

In the present disclosure, during example application of relevant data collection and processing, an informed consent or individual consent of a personal information subject needs to be obtained in strict accordance with the requirements of relevant national laws and regulations, and a subsequent data use and processing behavior is carried out within the scope of authorization of laws and regulations and the personal information subject.

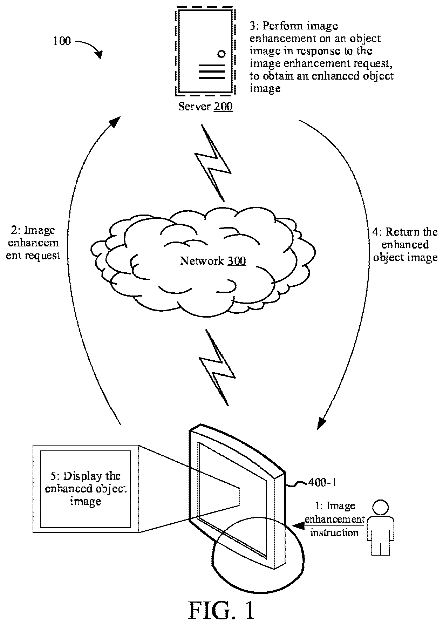

The following describes an image enhancement system provided in the embodiments of the present disclosure. FIG. 1 is a schematic diagram of an architecture of an image enhancement system according to an embodiment of the present disclosure. To support an exemplary application, the image enhancement system 100 includes a server 200, a network 300, and a terminal 400. The terminal 400 is connected to the server 200 through the network 300. The network 300 may be a wide area network, a local area network, or a combination of the two. Data transmission is implemented by using a wireless or wired link.

Herein, the terminal 400 (for example, on which a client supporting image enhancement is run) sends, in response to an image enhancement instruction for a to-be-enhanced object image, the object image and an image enhancement request for the object image to the server 200, where the object image is an image of a target object. The server 200 receives the object image and the image enhancement request; obtains a latent variable of the object image in response to the image enhancement request, and adds noise to the latent variable to obtain a noisy latent variable of the object image; extracts an object structural feature of the target object in the object image; denoises the noisy latent variable with reference to the object structural feature, to obtain a denoised latent variable of the object image; performs image reconstruction on the denoised latent variable to obtain a first enhanced object image of the object image; and returns the first enhanced object image to the terminal 400. The terminal 400 receives and displays the first enhanced object image.

In some embodiments, the image enhancement method provided in the embodiments of the present disclosure is implemented by an electronic device, for example, may be implemented by a terminal alone, may be implemented by a server alone, or may be collaboratively implemented by a terminal and a server. The embodiments of the present disclosure may be applied to various scenarios, including but not limited to a cloud technology, artificial intelligence, smart transportation, assisted driving, a video, an animation, a game, a metaverse, image generation, user generated content (UGC), and the like.

In some embodiments, the electronic device provided in the embodiments of the present disclosure for implementing the image enhancement method may be various types of terminals or servers. The server (for example, the server 200) may be an independent physical server, or may be a server cluster or distributed system including a plurality of physical servers. The terminal (for example, the terminal 400) may be a laptop computer, a tablet computer, a desktop computer, a smartphone, a smart voice interaction device (for example, a smart speaker), a smart home appliance (for example, a smart television), a smartwatch, an in-vehicle terminal, a wearable device, a virtual reality (VR) device, or the like, but is not limited thereto. The terminal and the server may be directly or indirectly connected through wired or wireless communication. This is not limited in the embodiments of the present disclosure.

In some embodiments, the image enhancement method provided in the embodiments of the present disclosure may be implemented by using a cloud technology. The cloud technology is a hosting technology that unifies a series of resources such as hardware, software, and networks in a wide area network or a local area network, to implement calculation, storage, processing, and sharing of data. The cloud technology is a generic term of a network technology, an information technology, an integration technology, a management platform technology, an application technology, and the like based on application of a cloud computing business model. The resources may form a resource pool and are used on demand, which is flexible and convenient. A cloud computing technology will become an important support. A backend service of a technology network system requires a lot of computing resources and storage resources. In an example, the server (for example, the server 200) may alternatively be a cloud server providing a basic cloud computing service such as a cloud service, a cloud database, cloud computing, a cloud function, cloud storage, a network service, cloud communication, a middleware service, a domain name service, a security service, a content delivery network (CDN), and a big data and AI platform.

In some embodiments, the image enhancement method provided in the embodiments of the present disclosure may be implemented by using a blockchain technology. A blockchain is a novel application mode of a computer technology such as distributed data storage, point-to-point transmission, a consensus mechanism, or an encryption algorithm. In an example, a plurality of servers may form a blockchain. The server is a node on the blockchain. There may be an information connection between the nodes on the blockchain, and information transmission may be performed between the nodes through the information connection. Data related to the image enhancement method provided in the embodiments of the present disclosure (for example, an image denoising model, an image enhancement model, and an enhanced object image (for example, a first enhanced object image)) may be stored in the blockchain.

In some embodiments, the terminal or the server may implement the image enhancement method provided in the embodiments of the present disclosure by running various computer-executable instructions or computer programs. For example, the computer-executable instruction may be a microprogram-level command, a machine instruction, or a software instruction. The computer program may be an original program or a software module in an operating system, may be a native application (APP), that is, a program that needs to be installed in an operating system to run, or may be a mini program that can be embedded into any APP, that is, a program that only needs to be downloaded into a browser environment to run. In a word, the foregoing computer-executable instruction may be any form of instruction, and the computer program may be any form of instruction, module, or plug-in.

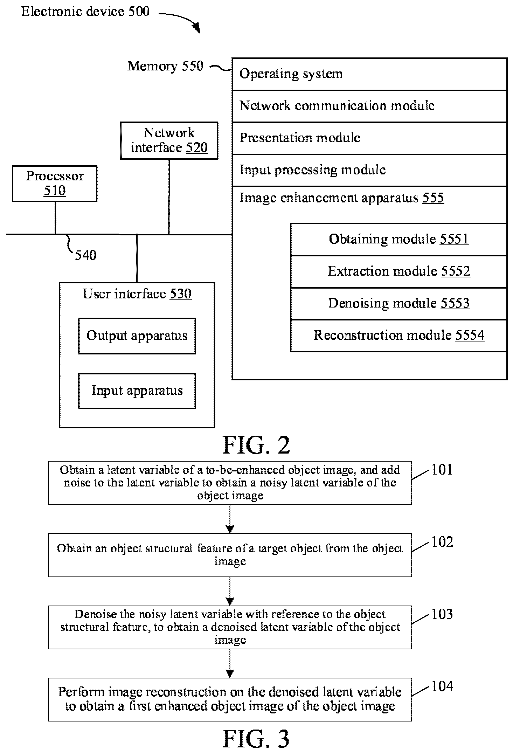

The following describes the electronic device provided in the embodiments of the present disclosure for implementing the image enhancement method. FIG. 2 is a schematic diagram of a structure of an electronic device according to an embodiment of the present disclosure. The electronic device 500 provided in this embodiment of the present disclosure may be a terminal or a server. As shown in FIG. 2, the electronic device 500 includes at least one processor 510, a memory 550, at least one network interface 520, and a user interface 530. The components in the electronic device 500 are coupled together through a bus system 540. The bus system 540 is configured to implement connection and communication between the components. In addition to a data bus, the bus system 540 further includes a power bus, a control bus, and a state signal bus. However, for clarity, various buses are marked as the bus system 540 in FIG. 2.

In some embodiments, the image enhancement apparatus provided in the embodiments of the present disclosure may be implemented in a software manner. FIG. 2 shows an image enhancement apparatus 555 stored in the memory 550. The image enhancement apparatus 555 may be software in a form of a program, a plug-in, and the like, and includes the following software modules: an obtaining module 5551, an extraction module 5552, a denoising module 5553, and a reconstruction module 5554. These modules are logical, and therefore can be freely combined or further split based on implemented functions. The functions of the modules are described below.

The image enhancement method provided in the embodiments of the present disclosure is described. As previously mentioned, the image enhancement provided in the embodiments of the present disclosure may be implemented by a server or a terminal alone, or may be collaboratively implemented by a server and a terminal. Therefore, an execution body of each operation is not repeatedly described below. FIG. 3 is a schematic flowchart of an image enhancement method according to an embodiment of the present disclosure. The image enhancement method provided in this embodiment of the present disclosure includes the following operations.

Operation 101: Obtain a latent variable of a to-be-enhanced object image, and add noise to the latent variable to obtain a noisy latent variable of the object image.

The object image is an image of a target object (a first object).

In operation 101, when image enhancement is performed on the object image, the latent variable of the object image may be first obtained. For example, the object image may be encoded to obtain the latent variable of the object image. Herein, the encoding process may be implemented by using an encoder. The encoding process is a downsampling process. To be specific, the object image is encoded by downsampling the object image, to obtain the latent variable of the object image. After the latent variable of the object image is obtained, the noise is added to the latent variable, to obtain the noisy latent variable of the object image. For example, the noise may be obtained from a target distribution through sampling. The target distribution includes a plurality of pieces of random data conforming to a specific data distribution type (for example, a normal distribution, a standard normal distribution, or an even distribution), and the random data conforming to the specific data distribution type may be generated based on a random data generation algorithm. For example, the noise may be Gaussian noise, Poisson noise, salt-and-pepper noise, or white Gaussian noise. The Gaussian noise is used as an example. Random data conforming to a Gaussian distribution may be generated by using the random data generation algorithm, then a target random number conforming to the Gaussian distribution is obtained through sampling from the random data conforming to the Gaussian distribution, and the target random number conforming to the Gaussian distribution is used as the noise.

The object image is the image of the target object. The target object may be a virtual object, for example, a virtual character, a virtual animal, a virtual animation character, or a virtual game character. Alternatively, the target object may be a real object, for example, a real person or object. The object image is an image on which image enhancement needs to be performed, and the process of image enhancement is a process of performing content refinement on image content. For example, the object image may be an object sketch (for example, a virtual character sketch in art design), and content refinement may be performed on the object sketch by performing image enhancement on the object sketch.

Operation 102: Obtain an object structural feature of the target object in the object image.

Operation 103: Denoise the noisy latent variable with reference to the object structural feature, to obtain a denoised latent variable of the object image.

In operation 102, the object structural feature of the target object is extracted from the object image. In operation 103, the noisy latent variable may be denoised with reference to the object structural feature (i.e., using the object structural feature as a constraint), to obtain the denoised latent variable of the object image, so that a denoising process is controlled by using the object structural feature of the object image.

In some embodiments, the object structural feature of the target object in the object image may be extracted by performing the following operations: obtaining at least one of the following object information of the target object in the object image: a depth map of the object image, object posture information of the target object, and object line-drawing information of the target object; and performing feature extraction on the object information to obtain the object structural feature.

Herein, the object structural feature may include at least one of the following features: an object posture feature (configured for representing a postural movement and the like of the target object) extracted from the object posture information of the target object, an object line-drawing feature (configured for representing a structural detail, an outline, and the like of the target object) extracted from the object line-drawing information of the target object, and a depth map feature extracted from the depth map of the object image. The depth map records a distance between a pixel in the object image and a camera, and can represent a structural feature of a surface of the target object in the object image. The object posture information may be obtained by performing object posture detection on the object image, which is implemented by using, for example, a pre-trained posture detection model. The object line-drawing information may be obtained by performing object line-drawing extraction on the object image, which is implemented by using, for example, a pre-trained line-drawing extraction model. The depth map may be obtained by performing depth map estimation on the object image, which is implemented by using, for example, a pre-trained depth estimation model.

In some embodiments, the process of performing feature extraction on the object structural feature may be implemented by using M first encoder blocks that are cascaded, M being an integer greater than 0. Based on this, extracting the object posture feature from the object posture information is used as an example, and the process of performing feature extraction on the object structural feature includes: invoking the $1^{st}$ first encoder block of the M first encoder blocks to encode fused object posture information to obtain an object structural feature outputted by the $1^{st}$ first encoder block; invoking an $i^{th}$ first encoder block of the M first encoder blocks to encode an object structural feature outputted by an $(i-1)^{th}$ first encoder block, to obtain an object structural feature outputted by the $i^{th}$ first encoder block; and traversing i to obtain an object structural feature outputted by each of the M first encoder blocks, i being an integer greater than 0 and not greater than M. Herein, i may be traversed from 1 to M, and during traversing, i is increased by 1 each time. Other manners for performing feature extraction on the object structural feature may also be applied in the disclosure.

Based on this, the process of denoising may be implemented by using an image denoising model, the image denoising model includes a first encoder and a first decoder, the first decoder includes M first decoder blocks that are cascaded, and the first decoder blocks are in one-to-one correspondence with the first encoder blocks. The process of denoising includes: invoking the first encoder to encode the noisy latent variable to obtain an encoded latent variable; invoking an $M^{th}$ first decoder block of the M first decoder blocks to decode the encoded latent variable and an object structural feature outputted by an $M^{th}$ first encoder block, to obtain a decoded latent variable outputted by the $M^{th}$ first decoder block; invoking an $i^{th}$ first decoder block of the M first decoder blocks to decode a decoded latent variable outputted by an $(i+1)^{th}$ first decoder block and the object structural feature outputted by the $i^{th}$ first encoder block, to obtain a decoded latent variable outputted by the $i^{th}$ first decoder block; and traversing i to obtain a decoded latent variable outputted by the $1^{st}$ first decoder block of the M first decoder blocks, and using the decoded latent variable outputted by the $1^{st}$ first decoder block as the denoised latent variable obtained by denoising the noisy latent variable. Herein, i may be traversed from M to 1, and during traversing, i is decreased by 1 each time.

The process of extracting the object line-drawing feature from the object line-drawing information and the process of extracting the depth map feature from the depth map are similar to the foregoing similar process of extracting the object posture feature from the object posture information, and details are not described herein again. Further, the noisy latent variable may be denoised with reference to the object structural feature (including at least one of the object posture feature, the object line-drawing feature, and the depth map feature), to obtain the denoised latent variable of the object image. In this way, control based on the object structural feature (including the object structural feature extracted from at least one piece of object information of the object posture information, the object line-drawing information, and the depth map) of the object image is added to denoising of the noisy latent variable, that is, the noisy latent variable is denoised with reference to the object structural feature, so that a loss of the object structural feature of the object image can be reduced during denoising. Therefore, a finally obtained enhanced object image can retain more object structural features of the object image, improving image enhancement effects on the object image.

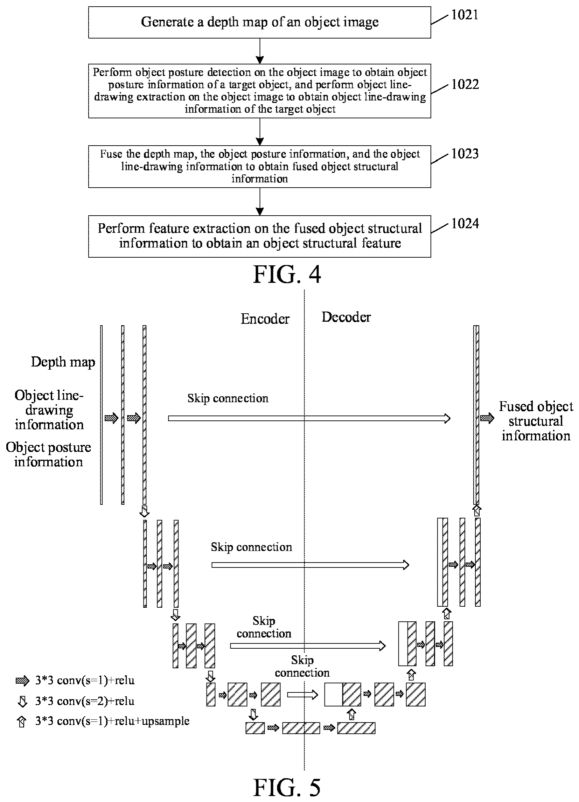

In some embodiments, the object structural feature is obtained by fusing the depth map, the object posture information, and the object line-drawing information. Refer to FIG. 4. Operation 102 shown in FIG. 3 may be implemented by using operation 1021 to operation 1024 shown in FIG. 4. Operation 1021: Generate the depth map of the object image. Operation 1022: Perform object posture detection on the object image to obtain the object posture information of the target object, and perform object line-drawing extraction on the object image to obtain the object line-drawing information of the target object. Operation 1023: Fuse the depth map, the object posture information, and the object line-drawing information to obtain fused object structural information. Operation 1024: Perform feature extraction on the fused object structural information to obtain the object structural feature.

Herein, the object structural feature is extracted from the fused object structural information, and the fused object structural information is obtained by fusing the object posture information of the target object, the object line-drawing information of the target object, and the depth map of the object image. Operation 1023 may be implemented by invoking a structural fusion model. The structural fusion model may be a U-Net structure (including an encoder and a decoder, as shown in FIG. 5). There may be encoders respectively for the object posture information, the object line-drawing information, and the depth map. Feature maps of the object posture information, the object line-drawing information, and the depth map are first extracted respectively by using the encoders, and then the feature maps are fused in skip connections through element-wise summation, to obtain the fused object structural information. Specifically, the object posture information is encoded by using the encoder for the object posture information, to obtain an encoded object posture feature; the object line-drawing information is encoded by using the encoder for the object line-drawing information, to obtain an encoded object line-drawing feature; and the depth map is encoded by using the encoder for the depth map, to obtain an encoded depth map feature. Each encoder includes a plurality of layers of encoding, and a corresponding feature is outputted through each layer of encoding. Correspondingly, the decoder also includes a plurality of layers of decoding. The layers of decoding are in one-to-one correspondence with the layers of encoding. An input of each layer of decoding includes an output of a corresponding layer of encoding (that is, when an encoded object posture feature, an encoded object line-drawing feature, and an encoded depth map feature that are outputted through a corresponding layer of encoding are decoded, the encoded object posture feature, the encoded object line-drawing feature, and the encoded depth map feature may be concatenated, and a concatenated feature is used as a part of an input of this layer of decoding). An output of the last layer of decoding is the fused object structural information.

In this way, the object structural feature is obtained through extraction by fusing the depth map, the object posture information, and the object line-drawing information, so that a feature representation capability of the object structural feature for the object structure of the target object can be improved, and the object structural feature is more accurate. Therefore, when the noisy latent variable is denoised with reference to the object structural feature, the loss of the object structural feature of the object image can be reduced during denoising. Therefore, the finally obtained enhanced object image can retain more object structural features of the object image more accurately, improving the image enhancement effects on the object image.

In some embodiments, the process of feature extraction in operation 1024 shown in FIG. 4 may be implemented by using the M first encoder blocks that are cascaded, M being an integer greater than 0. Based on this, an implementation process of operation 1024 in FIG. 4 includes: invoking the $1^{st}$ first encoder block of the M first encoder blocks to encode the fused object structural information to obtain the object structural feature outputted by the $1^{st}$ first encoder block; invoking the $i^{th}$ first encoder block of the M first encoder blocks to encode the object structural feature outputted by the $(i-1)^{th}$ first encoder block, to obtain the object structural feature outputted by the $i^{th}$ first encoder block; and traversing i to obtain the object structural feature outputted by each of the M first encoder blocks, i being an integer greater than 0 and not greater than M. Herein, i may be traversed from 1 to M, and during traversing, i is increased by 1 each time.

Herein, the first encoder block is for downsampling, and the encoding process is a downsampling process. The first encoder block may include a convolution layer and a self-attention layer. For example, when encoding the fused object structural information, the $1^{st}$ first encoder block may first perform self-attention processing on the fused object structural information to obtain a self-attention result, and then perform convolution on the self-attention result to obtain the object structural feature outputted by the $1^{st}$ first encoder block. For another example, when performing encoding, the $i^{th}$ first encoder block may first perform self-attention processing on the object structural feature outputted by the $(i-1)^{th}$ first encoder block, to obtain a self-attention result, and then perform convolution on the self-attention result to obtain the object structural feature outputted by the $i^{th}$ first encoder block. During actual implementation, the M first encoder blocks that are cascaded form a feature extraction model. For example, the feature extraction model may be a ControlNet model. In this way, the object structural feature outputted by each of the M first encoder blocks, that is, M object structural features, is extracted by performing feature extraction on the fused object structural information by using the M first encoder blocks that are cascaded.

In some embodiments, feature sizes of the object structural features outputted by the first encoder blocks may be different. For example, the feature sizes of the object structural features outputted increase from the $1^{st}$ first encoder block to the $M^{th}$ first encoder block. In this way, different feature sizes indicate that different first encoder blocks focus on different feature extraction ranges (receptive fields) when performing object structural feature extraction, so that the M object structural features that can be extracted can more precisely and comprehensively represent a feature of the target object. Therefore, when the noisy latent variable is denoised with reference to the object structural feature, the loss of the object structural feature of the object image can be reduced during denoising. Therefore, the finally obtained enhanced object image can retain the object structural feature of the object image more comprehensively and accurately, improving the image enhancement effects on the object image.

In some embodiments, the process of denoising is implemented by using the image denoising model, the image denoising model includes the first encoder and the first decoder, the first decoder includes the M first decoder blocks that are cascaded, and the first decoder blocks are in one-to-one correspondence with the first encoder blocks. Based on this, the process of denoising includes: invoking the first encoder to encode the noisy latent variable to obtain the encoded latent variable; invoking the $M^{th}$ first decoder block of the M first decoder blocks to decode the encoded latent variable and the object structural feature outputted by the $M^{th}$ first encoder block, to obtain the decoded latent variable outputted by the $M^{th}$ first decoder block; invoking the $i^{th}$ first decoder block of the M first decoder blocks to decode the decoded latent variable outputted by the $(i+1)^{th}$ first decoder block and the object structural feature outputted by the $i^{th}$ first encoder block, to obtain the decoded latent variable outputted by the $i^{th}$ first decoder block; and traversing i to obtain the decoded latent variable outputted by the $1^{st}$ first decoder block of the M first decoder blocks, and using the decoded latent variable outputted by the $1^{st}$ first decoder block as the denoised latent variable. Herein, i may be traversed from M to 1, and during traversing, i is decreased by 1 each time.

Herein, the image denoising model for denoising includes the first encoder and the first decoder including the M first decoder blocks. Each of the M first decoder blocks is configured to denoise the object structural feature outputted by each of the M first encoder blocks. Specifically, the first encoder is first invoked to encode the noisy latent variable to obtain the encoded latent variable; the $M^{th}$ first decoder block of the M first decoder blocks is invoked to decode the encoded latent variable and the object structural feature outputted by the $M^{th}$ first encoder block, to obtain the decoded latent variable outputted by the $M^{th}$ first decoder block; the $i^{th}$ first decoder block of the M first decoder blocks is invoked to decode the decoded latent variable outputted by the $(i+1)^{th}$ first decoder block and the object structural feature outputted by the $i^{th}$ first encoder block, to obtain the decoded latent variable outputted by the $i^{th}$ first decoder block; and i is traversed to obtain the decoded latent variable outputted by the $1^{st}$ first decoder block of the M first decoder blocks, and the decoded latent variable outputted by the $1^{st}$ first decoder block is used as the denoised latent variable. In this way, denoising the noisy latent variable by using the M first decoder blocks with reference to the object structural feature outputted by each first encoder block not only retains the object structural feature of the object image more comprehensively and accurately, but also improves denoising effects on the noisy latent variable, improving the image enhancement effects.

In some embodiments, a size of input data of each of the M first decoder blocks may also be different. For example, a size of input data of the $i^{th}$ first decoder block may be equal to a feature size of the object structural feature outputted by the $i^{th}$ first encoder block. This can ensure that the first decoder block can quickly and precisely process the object structural feature outputted by the first encoder block, thereby improving processing efficiency and processing precision of the first decoder block.

In some embodiments, the first decoder block includes a convolution layer and a self-attention layer. For example, the convolution layer of the $M^{th}$ first decoder block is invoked to perform convolution on the encoded latent variable and the object structural feature outputted by the $M^{th}$ first encoder block, to obtain a convolutional feature of an $M^{th}$ layer, and then the self-attention layer of the $M^{th}$ first decoder block is invoked to perform self-attention processing on the convolutional feature of the $M^{th}$ layer to obtain the decoded latent variable outputted by the $M^{th}$ first decoder block. The convolution layer of the $i^{th}$ first decoder block is invoked to perform convolution on the decoded latent variable outputted by the $(i+1)^{th}$ first decoder block and the object structural feature outputted by the $i^{th}$ first encoder block, to obtain a convolutional feature of the $i^{th}$ layer, and then the self-attention layer of the $i^{th}$ first decoder block is invoked to perform self-attention processing on the convolutional feature of the $i^{th}$ layer to obtain the decoded latent variable outputted by the $i^{th}$ first decoder block.

In some embodiments, the encoded latent variable and the object structural feature outputted by the $M^{th}$ first encoder block may be decoded in the following manner, to obtain the decoded latent variable outputted by the $M^{th}$ first decoder block: performing, based on a first weight value of the encoded latent variable and a second weight value of the object structural feature outputted by the $M^{th}$ first encoder block, weighted summation on the encoded latent variable and the object structural feature outputted by the $M^{th}$ first encoder block, to obtain a first concatenated feature; and decoding the first concatenated feature to obtain the decoded latent variable outputted by the $M^{th}$ first decoder block. Correspondingly, the decoded latent variable outputted by the $(i+1)^{th}$ first decoder block and the object structural feature outputted by the $i^{th}$ first encoder block may be decoded in the following manner, to obtain the decoded latent variable outputted by the $i^{th}$ first decoder block: performing, based on a third weight value of the decoded latent variable outputted by the $(i+1)^{th}$ first decoder block and a fourth weight value of the object structural feature outputted by the $i^{th}$ first encoder block, weighted summation on the decoded latent variable outputted by the $(i+1)^{th}$ first decoder block and the object structural feature outputted by the $i^{th}$ first encoder block, to obtain a second concatenated feature; and decoding the second concatenated feature to obtain the decoded latent variable outputted by the $i^{th}$ first decoder block.

The first weight value, the second weight value, the third weight value, and the fourth weight value may be preset, and during actual implementation, may be further adjusted based on an actual situation. In this way, control based on the object structural feature is added to denoising of the noisy latent variable, and impact of the object structural feature on denoising effects may be controlled by using a weight value set for the object structural feature, so that flexibility of impact of the object structural feature on the denoising process is improved. A user can set the weight value based on a requirement.

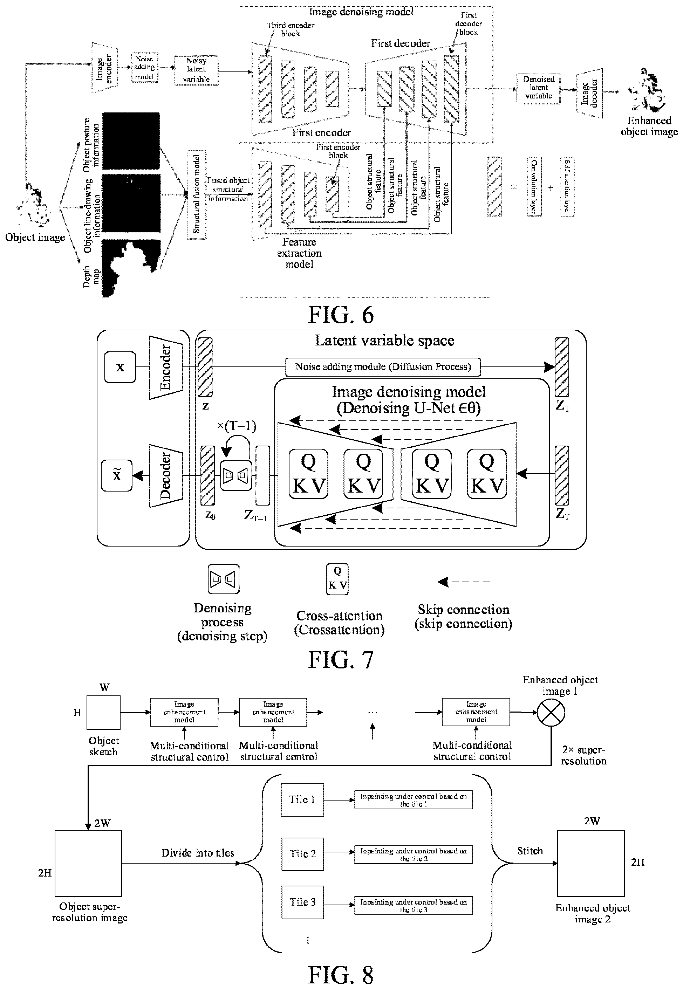

In an example, refer to FIG. 6. An image enhancement model includes the feature extraction model (for example, the ControlNet model), the image denoising model, a noise adding model, the structural fusion model, an image encoder, and an image decoder. The image denoising model is actually a U-Net model, and includes the first encoder of the U-Net and the first decoder of the U-Net. The feature extraction model includes the M first encoder blocks that are cascaded. The first decoder includes the M first decoder blocks that are cascaded. The first decoder blocks are in one-to-one correspondence with the first encoder blocks.

Therefore, based on the image enhancement model shown in FIG. 6, (1) the image encoder is invoked to encode the to-be-enhanced object image to obtain the latent variable. (2) The noise adding model is invoked to add the noise to the latent variable to obtain the noisy latent variable. (3) The structural fusion model is invoked to fuse the object posture information, the object line-drawing information, and the depth map, to obtain the fused object structural information. (4) The feature extraction model (including the M first encoder blocks that are cascaded) is invoked to extract the object structural feature: invoking the $1^{st}$ first encoder block of the M first encoder blocks to encode the fused object structural information to obtain the object structural feature outputted by the $1^{st}$ first encoder block; invoking the $i^{th}$ first encoder block of the M first encoder blocks to encode the object structural feature outputted by the $(i-1)^{th}$ first encoder block, to obtain the object structural feature outputted by the $i^{th}$ first encoder block; and traversing i to obtain the object structural feature outputted by each of the M first encoder blocks. (5) The first encoder is invoked to encode the noisy latent variable to obtain the encoded latent variable. (6) The $M^{th}$ first decoder block of the M first decoder blocks is invoked to decode the encoded latent variable and the object structural feature outputted by the $M^{th}$ first encoder block, to obtain the decoded latent variable outputted by the $M^{th}$ first decoder block; the $i^{th}$ first decoder block of the M first decoder blocks is invoked to decode the decoded latent variable outputted by the $(i+1)^{th}$ first decoder block and the object structural feature outputted by the $i^{th}$ first encoder block, to obtain the decoded latent variable outputted by the $i^{th}$ first decoder block; and i is traversed to obtain the decoded latent variable outputted by the $1^{st}$ first decoder block of the M first decoder blocks, and the decoded latent variable outputted by the $1^{st}$ first decoder block is used as the denoised latent variable obtained by denoising the noisy latent variable. (7) The image decoder is invoked to decode the denoised latent variable to obtain the first enhanced object image of the object image.

With the application of the foregoing embodiment, control based on the object structural feature (that is, the object structural feature extracted from the fused object structural information of the object posture information, the object line-drawing information, and the depth map) of the object image is added to denoising of the noisy latent variable during image enhancement of the object image, that is, the noisy latent variable is denoised with reference to the object structural feature, so that the loss of the object structural feature of the object image can be reduced. Therefore, the finally obtained enhanced object image can retain more object structural features of the object image, improving the image enhancement effects on the object image.

In an actual application, the image enhancement model may be based on an image generative diffusion model, for example, a Stable Diffusion model or a deepfloy_if model. The image denoising model may be a U-Net-based denoising U-Net model.

Still refer to FIG. 6. The first encoder includes P third encoder blocks that are cascaded, P being an integer greater than 0. Each third encoder block includes a convolution layer and a self-attention layer. Based on this, the process of invoking the first encoder to encode the noisy latent variable includes: invoking the 1st third encoder block of the P third encoder blocks to encode the noisy latent variable to obtain an encoding result outputted by the 1st third encoder block; invoking a pth third encoder block of the P third encoder blocks to encode an encoding result outputted by a (p-1)th third encoder block, to obtain an encoding result outputted by the pth third encoder block; traversing p to obtain an encoding result outputted by a Pth third encoder block, p being an integer greater than 0 and not greater than P; and using the encoding result outputted by the Pth third encoder block as the encoded latent variable.

Herein, the first encoder may also include at least one third encoder block, and each third encoder block includes a convolution layer and a self-attention layer. Specifically, the convolution layer of the 1st third encoder block is invoked to perform convolution on the noisy latent variable to obtain a convolutional feature, and then the self-attention layer of the 1st third encoder block is invoked to perform self-attention processing on the convolutional feature to obtain the encoding result outputted by the 1st third encoder block. The convolution layer of the pth third encoder block is invoked to perform convolution on the encoding result outputted by the (p-1)th third encoder block, to obtain a convolutional feature, and then the self-attention layer of the pth third encoder block is invoked to perform self-attention processing on the convolutional feature to obtain the encoding result outputted by the pth third encoder block. In this way, at least one instance of encoding is performed on the noisy latent variable by using the at least one third encoder block, so that more detailed features can be extracted, improving encoding effects of the first encoder, and providing more feature details for subsequent processing.

In some embodiments, denoising includes T instances of denoising, T being an integer greater than 0. The noisy latent variable may be denoised with reference to the object structural feature by performing the following operations, to obtain the denoised latent variable of the object image: performing the 1st instance of denoising on the noisy latent variable with reference to the object structural feature, to obtain an intermediate denoised latent variable outputted through the 1st instance of denoising; performing, with reference to the object structural feature, a tth instance of denoising on an intermediate denoised latent variable outputted through a (t-1)th instance of denoising, to obtain an intermediate denoised latent variable outputted through the tth instance of denoising; and traversing t to obtain an intermediate denoised latent variable outputted through a Tth instance of denoising, and using the intermediate denoised latent variable outputted through the Tth instance of denoising as the denoised latent variable of the object image. Herein, t may be traversed from 1 to T, and during traversing, t is increased by 1 each time.

The process of noise adding in this embodiment of the present disclosure is a forward diffusion process, that is, the noise is gradually added to the latent variable until the noisy latent variable is obtained. The process of denoising is a reverse diffusion process, that is, the T instances of denoising are performed on the noisy latent variable to gradually remove the noise to obtain the denoised latent variable. The T instances of denoising may be understood as denoising at T time steps, and one instance of denoising is completed at each time step. The process of each instance of denoising may be implemented by using a denoising logic provided in the foregoing embodiment. In this way, denoising effects on the noisy latent variable can be improved, so that the obtained denoised latent variable can retain the feature of the object image as much as possible, improving the image enhancement effects on the object image.

Operation 104: Perform image reconstruction on the denoised latent variable to obtain a first enhanced object image of the object image.

In operation 104, the process of image reconstruction is decoding the denoised latent variable to obtain the first enhanced object image of the object image. The decoding process may be implemented by using a decoder. The decoding process is an upsampling process.

In some embodiments, a plurality of instances of image enhancement may be performed on the object image. To be specific, after image reconstruction is performed on the denoised latent variable to obtain the first enhanced object image of the object image, image enhancement may be further performed on the first enhanced object image. This may be implemented by performing the following operations: obtaining a target latent variable of the first enhanced object image, and adding noise to the target latent variable to obtain a target noisy latent variable of the first enhanced object image; extracting a target object structural feature of the target object in the first enhanced object image; denoising the target noisy latent variable with reference to the target object structural feature, to obtain a target denoised latent variable of the first enhanced object image; and performing image reconstruction on the target denoised latent variable to obtain a second enhanced object image of the object image. In this embodiment of the present disclosure, the plurality of instances of image enhancement on the object image are completed. The process of each instance of image enhancement may be implemented by using the processing process of operation 101 to operation 104. An input of each instance of image enhancement other than the first instance of image enhancement (an input of the first instance of image enhancement is the object image) is an output of the previous instance of image enhancement. In this way, the image enhancement effects on the object image can be further improved through the plurality of instances of cascaded image enhancement.

In some embodiments, after image reconstruction is performed on the denoised latent variable to obtain the first enhanced object image of the object image, image super-resolution may be further performed on the first enhanced object image to obtain an object super-resolution image. The object super-resolution image is divided into a plurality of tiles. Image enhancement is performed separately on the tiles to obtain enhanced tiles of the tiles. The enhanced tiles are stitched to obtain a third enhanced object image of the object image.

Herein, image super-resolution (ISR) is a computer vision technology, aiming to reconstruct a high-definition image with a higher resolution from a low-resolution image. This technology is widely applied to the fields such as image restoration, video processing, medical imaging, satellite image parsing, and augmented reality. A basic idea of image super-resolution is to estimate a pixel value at a high resolution by analyzing a feature and a mode in a low-resolution image. For example, image super-resolution may be performed by using a real enhanced super-resolution generative adversarial network (R-ESRGAN) model to implement $2\times$ super-resolution of the image. Image super-resolution is performed on the first enhanced object image to obtain the object super-resolution image. Because image super-resolution does not add details but enlarges an image size based on the original image, some originally blurry details may become blurrier. Therefore, image enhancement may be further performed locally on the image, to improve quality and add details. Specifically, the object super-resolution image is divided into the plurality of tiles (each tile is a tile), and then image enhancement is performed separately on the tiles to obtain the enhanced tiles of the tiles, so that the enhanced tiles are stitched to obtain the third enhanced object image of the object image. In this way, not only an image resolution of the first enhanced object image is increased through image super-resolution, but also local image enhancement is separately performed based on each tile while the image resolution is increased, so that the image enhancement effects on the object image are further improved.

In some embodiments, image enhancement may be performed separately on the tiles to obtain the enhanced tiles of the tiles: performing the following processing for each tile: adding noise to a tile latent variable of the tile to obtain a noisy tile latent variable of the tile; performing feature extraction on the tile to obtain a tile feature of the tile; performing tile denoising on the noisy tile latent variable with reference to the tile feature, to obtain a denoised tile latent variable of the tile; and performing image reconstruction on the denoised tile latent variable to obtain the enhanced tile of the tile. Each processing operation for the tile may be the same as each processing operation for the object image.

For example, the process of performing feature extraction on the tile is implemented by using N second encoder blocks that are cascaded, N being an integer greater than 0. Based on this, feature extraction may be performed on the tile by performing the following operations, to obtain the tile feature of the tile: invoking the $1^{st}$ second encoder block of the N second encoder blocks to encode the tile to obtain a tile feature outputted by the $1^{st}$ second encoder block; invoking a $j^{th}$ second encoder block of the N second encoder blocks to encode a tile feature outputted by a $(j-1)^{th}$ second encoder block, to obtain a tile feature outputted by the $j^{th}$ second encoder block; and traversing j to obtain a tile feature outputted by each of the N second encoder blocks, j being an integer greater than 0 and not greater than N. Herein, i may be traversed from 1 to M, and during traversing, i is increased by 1 each time.

For example, the process of tile denoising is implemented by using an image denoising model, the image denoising model includes a second encoder and a second decoder, the second decoder includes N second decoder blocks that are cascaded, and the second decoder blocks are in one-to-one correspondence with the second encoder blocks. Based on this, the process of tile denoising includes: invoking the second encoder to encode the noisy tile latent variable to obtain an encoded tile latent variable; performing weight value-based weighted summation on the encoded tile latent variable and a tile feature outputted by an $N^{th}$ second encoder block, to obtain a third concatenated feature, and invoking an $N^{th}$ second decoder block of the N second decoder blocks to decode the third concatenated feature to obtain a decoded tile latent variable outputted by the $N^{th}$ second decoder block; performing weight value-based weighted summation on a decoded tile latent variable outputted by a $(j+1)^{th}$ second decoder block and the tile feature outputted by the $j^{th}$ second encoder block, to obtain a fourth concatenated feature, and invoking a $j^{th}$ second decoder block of the N second decoder blocks to decode the fourth concatenated feature to obtain a decoded tile latent variable outputted by the $j^{th}$ second decoder block; and traversing j to obtain a decoded tile latent variable outputted by the $1^{st}$ second decoder block of the N second decoder blocks, and using the decoded tile latent variable outputted by the $1^{st}$ second decoder block as the denoised tile latent variable obtained by performing tile denoising on the noisy tile latent variable. Herein, i may be traversed from M to 1, and during traversing, i is decreased by 1 each time.

In some embodiments, before the latent variable of the to-be-enhanced object image is obtained, a target image of the target object may be obtained. Size adjustment is performed on the target image based on a plurality of different sizes, to obtain an adjusted image of each size. The adjusted image of each size is used as the object image. Herein, the to-be-enhanced object image is obtained by performing size adjustment on the target image based on the plurality of different sizes. Size adjustment may include size reduction and size enlargement. The adjusted images of the plurality of different sizes may include a target image of an original size. In this way, corresponding image enhancement effects may be achieved for target images of different sizes, and image enhancement effects for images of different sizes are different in a same image enhancement procedure. Therefore, optionality of the obtained enhanced object image can be improved.

In an exemplary scenario, this embodiment of the present disclosure may be applied to a game design scenario, and is specifically applied to a scenario of designing a virtual object in a game scenario. For example, an object image of the virtual object (for example, an object sketch of the virtual object) designed by a game designer is obtained, then a latent variable of the object image is extracted, and noise is added to the latent variable to obtain a noisy latent variable of the object image, the object image being an image of the virtual object. An object structural feature of the virtual object in the object image is extracted. The noisy latent variable is denoised with reference to the object structural feature, to obtain a

EP 4 668 206 A1

denoised latent variable of the object image. Image reconstruction is performed on the denoised latent variable to obtain a first enhanced object image of the object image. In this way, control based on the object structural feature of the object image is added to denoising of the noisy latent variable during image enhancement of the object image, that is, the noisy latent variable is denoised with reference to the object structural feature, so that a loss of the object structural feature of the object image can be reduced during denoising. Therefore, a finally obtained enhanced object image can retain more object structural features of the object image, improving image enhancement effects on the object image and game design effects. In addition, automatic image enhancement effects can be achieved, improving game design efficiency.

In an exemplary scenario, this embodiment of the present disclosure may be applied to an animation design scenario, and is specifically applied to a scenario of designing an animation object in an animation. For example, an object image of the animation object (for example, an object sketch of the animation object) designed by an animation designer is obtained, then a latent variable of the object image is extracted, and noise is added to the latent variable to obtain a noisy latent variable of the object image, the object image being an image of the animation object. An object structural feature of the animation object in the object image is extracted. The noisy latent variable is denoised with reference to the object structural feature, to obtain a denoised latent variable of the object image. Image reconstruction is performed on the denoised latent variable to obtain a first enhanced object image of the object image. In this way, control based on the object structural feature of the object image is added to denoising of the noisy latent variable during image enhancement of the object image, that is, the noisy latent variable is denoised with reference to the object structural feature, so that a loss of the object structural feature of the object image can be reduced during denoising. Therefore, a finally obtained enhanced object image can retain more object structural features of the object image, improving image enhancement effects on the object image and animation design effects. In addition, automatic image enhancement effects can be achieved, improving animation design efficiency.

In an exemplary scenario, this embodiment of the present disclosure may be applied to a UCG scenario. For example, an object image of a target object to be produced by a user (for example, a personal image of the user or an object sketch of an object designed by the user) is obtained, then a latent variable of the object image is extracted, and noise is added to the latent variable to obtain a noisy latent variable of the object image, the object image being an image of the target object. An object structural feature of the target object in the object image is extracted. The noisy latent variable is denoised with reference to the object structural feature, to obtain a denoised latent variable of the object image. Image reconstruction is performed on the denoised latent variable to obtain a first enhanced object image of the object image. In this way, control based on the object structural feature of the object image is added to denoising of the noisy latent variable during image enhancement of the object image, that is, the noisy latent variable is denoised with reference to the object structural feature, so that a loss of the object structural feature of the object image can be reduced during denoising. Therefore, a finally obtained enhanced object image can retain more object structural features of the object image, improving image enhancement effects on the object image and content generation effects. In addition, automatic image enhancement effects can be achieved, improving content generation efficiency and user stickiness of a UCG platform.

With the application of the foregoing embodiment of the present disclosure, first, the latent variable of the to-be-enhanced object image is obtained, and noise is added to the latent variable to obtain the noisy latent variable of the object image. Then, the object structural feature of the target object in the object image is extracted. Therefore, the noisy latent variable is denoised with reference to the object structural feature, to obtain the denoised latent variable of the object image. Finally, image reconstruction is performed on the denoised latent variable to obtain the first enhanced object image of the object image. Herein, control based on the object structural feature of the object image is added to denoising of the noisy latent variable during image enhancement of the object image, that is, the noisy latent variable is denoised with reference to the object structural feature, so that a loss of the object structural feature of the object image can be reduced during denoising. Therefore, a finally obtained enhanced object image can retain more object structural features of the object image, improving image enhancement effects on the object image.

The following uses image enhancement (that is, image refinement) on the object sketch (that is, the object image) as an example to describe an exemplary application of this embodiment of the present disclosure to an actual application scenario.

In art design, design of an object (for example, character or animal) image is usually divided into three phases, including concept setting, sketch design, and sketch refinement. (1) At the concept setting phase, a designer performs preliminary design and conception based on a basic requirement and a feature (for example, the gender, the age, the personality, and other features of the object) of the object image discussed with a client or a team member, to obtain a preliminary concept setting. (2) At the sketch design phase, the designer usually further design and conceive a concept setting by using a tool such as a sketch or a hand drawing, to obtain a corresponding object sketch. (3) At the sketch refinement phase, the designer usually further retouches and refines the object sketch to obtain a finer and more real object image. The designer performs finer design and conception on each part of the object, including facial expressions, clothing details, muscle lines, and the like. In the foregoing design procedure of the object image, each operation requires manual participation of the designer, resulting in low production efficiency of original drawing design. Therefore, the procedure may be automated to improve the production efficiency of original drawing design, for example, the sketch refinement phase is automated.

In the related art, refinement of the object sketch is usually performed by gradually adding noise to the object image until the object image becomes a complete random noise image, and then gradually removing the noise starting from the random noise image, to obtain a final enhanced object image. However, because a denoising intensity in a denoising process is difficult to control, the final enhanced object image is prone to a loss of a large quantity of original features, resulting in poor enhancement effects of the enhanced object image.

Based on this, an embodiment of the present disclosure provides an image enhancement method, to at least solve the foregoing problem. This embodiment of the present disclosure provides an image enhancement model. The image enhancement model is based on an image generative diffusion model. To enhance retention of the feature of the object sketch, in this embodiment of the present disclosure, (1) an object structural feature including object posture information, object line-drawing information, and depth map information is added based on the image generative diffusion model. The three types of information have respective focuses, and are fused to help enhance structural control and improve structural consistency during refinement. (2) An image resolution is improved by using a super-resolution technology, then image details are added for image regions one by one in units of tiles through tile-based control, and tiles of the entire image are stitched to obtain a refined image. (3) A multi-size refinement policy: It is proposed to perform multi-size refinement on the object sketch to cover use cases of different degrees of refinement.

Next, the image generative diffusion model is described. The image generative diffusion model is a diffusion process-based generation model, and is configured to generate a high-quality image with rich texture and details. An image generation process of the image generative diffusion model is a diffusion process in which noise gradually fades away. In the diffusion process, the model gradually removes, starting from an original image including random noise, the noise of the initial image to obtain a generated image. The generation process of the image generative diffusion model is divided into a forward diffusion process and a reverse diffusion process. In the forward diffusion process, the model gradually adds noise to the original image until the original image becomes a complete random noise image. In the reverse diffusion process, the model gradually removes the noise starting from the complete random noise image, to obtain the generated image. In the reverse diffusion process, the model needs to learn how to remove the noise at each time step. Therefore, the model usually uses a neural network structure, for example, a convolutional neural network (CNN) or a variational autoencoder (VAE).

In an example, FIG. 7 is a schematic diagram of a structure of an image generative diffusion model according to an embodiment of the present disclosure. Herein, the image generative diffusion model is implemented based on a Stable Diffusion network, and includes an encoder, a decoder, a noise adding module (diffusion process), and an image denoising model (constructed based on a U-Net, for example, a denoising U-Net). The encoder is configured to convert an input image $x$ into a latent variable (latent representation) $z$. The latent variable may capture an important feature of the input image, helping the model remove the noise in the reverse diffusion process. The noise adding module is configured to perform noise adding (for example, adding of white Gaussian noise) on the latent variable to obtain a noisy latent variable $z_T$. The image denoising model is configured to denoise the noisy latent variable $z_T$ to obtain a denoised latent variable $z_0$. The denoising process is divided into a plurality of time steps. The image denoising model may predict a noise item that needs to be removed at each time step, and remove corresponding noise at each time step, to sequentially obtain $z_{T-1}$, $z_{r-2}$, ... $z_1$, and $z_0$. The decoder is configured to perform image reconstruction based on the denoised latent variable $z_0$, to obtain a generated image $\tilde{x}$. In a model training process, image generation may be learned by minimizing a reconstruction error. The reconstruction error is calculated based on a difference between the generated image and the original image. By optimizing the reconstruction error, the model may learn to gradually remove the noise in the reverse diffusion process, to finally generate a high-quality image.

In an actual application, image refinement of the object sketch needs to balance a completion degree of refinement, a structural restoration degree of the refined image, and image quality of the refined image. FIG. 8 is a schematic flowchart of an image enhancement method according to an embodiment of the present disclosure. Herein, the input object sketch is processed by the image enhancement model for a plurality of rounds under control of the object structural feature, to obtain an enhanced object image 1. Then, super-resolution is performed on the enhanced object image 1 to enlarge the enhanced object image 1 to twice an original size, to obtain an object super-resolution image. The object super-resolution image is divided into a plurality of tiles row by row and column by column, and image inpainting (that is, image enhancement) is performed through tile-based control by using each tile as a unit, to improve local details of each tile. Finally, all the tiles are stitched together to obtain an enhanced object image 2. The following provides descriptions respectively.

Phase (1) is processing by the image enhancement model under the control of the object structural feature. A processing process of phase (1), as shown in FIG. 8, is implemented by using a plurality of image enhancement models that are cascaded. The plurality of image enhancement models that are cascaded can alleviate a problem that the image enhancement model is highly dependent on a denoising intensity.

Herein, a structure of the image enhancement model is shown in FIG. 6. The image enhancement model is based on the image generative diffusion model shown in FIG. 7, with a structural control branch added. To be specific, the image enhancement model provided in this embodiment of the present disclosure includes the feature extraction model (for example, the ControlNet model), the image denoising model (for example, the denoising U-Net constructed based on the U-Net in FIG. 7), the noise adding model, the structural fusion model, the image encoder, and the image decoder. The image denoising model is actually a U-Net model, and includes the first encoder of the U-Net and the first decoder of the U-Net. The feature extraction model includes the M first encoder blocks that are cascaded. The first decoder includes the M first decoder blocks that are cascaded. The first decoder blocks are in one-to-one correspondence with the first encoder blocks. The first encoder includes a plurality of encoder blocks, and each encoder block includes a convolutional network and a self-attention network. The first decoder includes a plurality of decoder blocks, and each decoder block also includes a convolutional network and a self-attention network. The feature extraction model includes a plurality of feature extraction layers, and each feature extraction layer also includes a convolutional network and a self-attention network.

For the object sketch, object posture information of the object sketch may be extracted by using a posture detection model, the object line-drawing information of the object sketch may be extracted by using a line-drawing extraction model, and a depth map of the object sketch may be extracted by using a depth estimation model. The object posture information indicates a postural movement of the target object. The object line-drawing information indicates structural details of the target object in the image, and is two-dimensional structural information. The depth map records a between a pixel in the image and a camera, and may represent structural information of a surface of the target object. Fusion of the three types of information is beneficial for enhancing structural control and improving structural consistency during refinement. The structural fusion model fuses the object posture information, the object line-drawing information, and the depth map, to obtain fused object structural information. During fusion, there may be encoders respectively for the object posture information, the object line-drawing information, and the depth map. Since the structural fusion model is a U-Net model, feature extraction is first performed for the object posture information, the object line-drawing information, and the depth map respectively by using the encoders, and then feature maps of the three types of structural information are fused in skip connections through element-wise summation, to obtain the fused object structural information. The feature extraction model performs feature extraction on the fused object structural information to obtain the object structural feature.

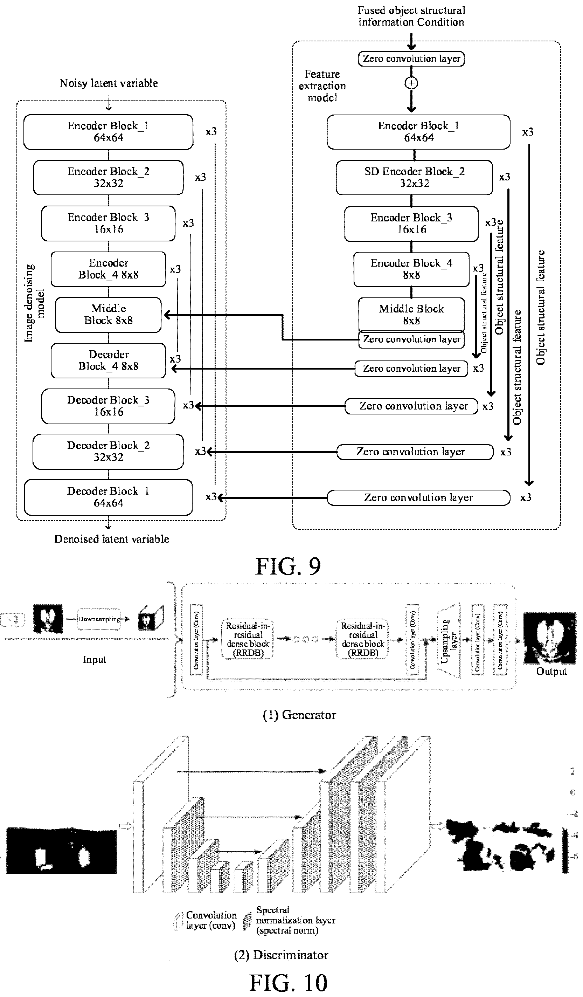

As shown in FIG. 9, a structure on the left is a structure of the image denoising model denoising U-Net, and includes the first encoder (including a plurality of encoder blocks) and the first decoder (including a plurality of decoder blocks and a middle block). A structure on the right in FIG. 9 is a structure of the feature extraction model (that is, the ControlNet model), and includes a plurality of encoder blocks, a middle block, and a plurality of zero convolution layers. Each encoder block of the feature extraction model outputs an object structural feature, and the object structural feature of each encoder block is inputted into a corresponding layer (including the decoder block and the middle block) of the first decoder of the U-Net by using the zero convolution layer, so that the first decoder of the U-Net can generate a denoised latent variable $x_0$ with reference to the object structural feature and image features of a plurality of layers extracted by the first encoder of the U-Net from a noisy latent variable $x_t$ (obtained by adding noise to a latent variable of an object sketch $x$), to generate an enhanced object image $\tilde{x}$ based on the denoised latent variable $x_0$. In this way, the generated enhanced object image can be affected by using the object structural feature of the target object.

The encoder block, the decoder block, and the middle block may be based on a squeeze-and-excitation (SD) module. The "squeeze-and-excitation" module is configured to enhance a receptive field and an expression capability of a network for a feature. The SD module improves feature representation quality by using two operations: squeeze and excitation. Herein, squeeze means compressing a feature mapping through global average pooling, to obtain a single feature vector including global context information of an input feature map. Excitation means learning importance of a feature by using two fully-connected layers, and then applying a learned weight to an original feature mapping, to enhance an important feature and suppress an unimportant feature. The SD module may be inserted into any location of the convolutional neural network, to improve feature interactivity and context information at different layers. In this manner, performance of the model can be improved, especially when a visual task such as image recognition and object detection is processed.

In addition, at phase (1), there are a plurality of important hyperparameters: a quantity of cascaded image enhancement models, a denoising intensity of a single image enhancement model, and a structural control intensity of the object structural feature. The structural control intensity is a weight ratio of fusion of the object structural feature to the first decoder. A higher structural control intensity indicates a higher weight for fusion of the object structural feature. For example, values of the foregoing hyperparameters may be shown in the following Table 1, and in an actual application, may be further adjusted based on a requirement.

Table 1

| Parameter name | Quantity of models | Denoising intensity | Structural control intensity |
|---|---|---|---|
| Value | 2 | 0.2 | 0.5 |

In an actual application, in a training process of the foregoing cascaded image enhancement models, the involved structure fusion model and feature extraction model (for example, the ControlNet model) need to be trained, and other parameters of the models may use pre-trained weights, and do not need to participate in training. Specifically, a training data set may be collected. During preprocessing, a posture graph, a line drawing graph, and a depth map of each image sample are calculated. In addition, corresponding "original image" data is generated through image degradation (for example, Gaussian blurring). For example, training parameters may be as follows: a batch size is equal to 64, a learning rate is equal to 1e-4, a quantity of training steps is 200000, and an optimizer is Adam. A loss function may be an image reconstruction loss function $L_{LDM}$:

$$L_{LDM} := \mathbb{E}_{\mathcal{E}(x), \epsilon \sim \mathcal{N}(0,1), t}\left[\|\epsilon - \epsilon_\theta(z_t, t)\|_2^2\right]$$

$\epsilon$ represents Gaussian noise. $\theta$ represents a model parameter of a U-Net-based image denoising model. $z_t$ represents the noisy latent variable. t represents a sampling time point.

Phase (2) is a combination of image super-resolution and tile-based controlled image inpainting.

(a) Image super-resolution: At phase (2), image super-resolution is first performed on the enhanced object image 1 obtained at phase (1), to improve the image resolution, to obtain the object super-resolution image. In an actual application, image super-resolution may be implemented by using an image super-resolution model. For example, image super-resolution is implemented by using a real enhanced super-resolution generative adversarial network (R-ESRGAN) model. The R-ESRGAN model is a generative adversarial network-based image super-resolution method. The R-ESRGAN model includes two parts: a generator and a discriminator. (1) The generator is responsible for upsampling a low-resolution image to a high-resolution image. (1) in FIG. 10 is a schematic diagram of a structure of the generator. The generator includes a plurality of convolution layers (conv), an upsampling layer, and a plurality of residual-in-residual dense blocks (RRDBs). (2) The discriminator is responsible for distinguishing a generated high-resolution image from a real high-resolution image. (2) in FIG. 10 is a schematic diagram of a structure of the discriminator. The discriminator includes a plurality of convolution layers (conv) and a plurality of spectral normalization layers (spectral norm).
Because image super-resolution does not add details but enlarges an image size based on the original image, some originally blurry details may become blurrier. Therefore, image enhancement may be further performed locally on the image, to improve quality and add details.

(b) Tile-based controlled image inpainting: After image super-resolution is performed, a size of an image whose original size is (H, W) is enlarged to (2H, 2W). Because most image sizes in general design scenarios are greater than (1024, 1024), and video memory required for image enhancement with a size of (2H, 2W) easily exceeds 32G of a single card V100, the object super-resolution image may be divided into a plurality of tiles for refinement, to reduce video memory.

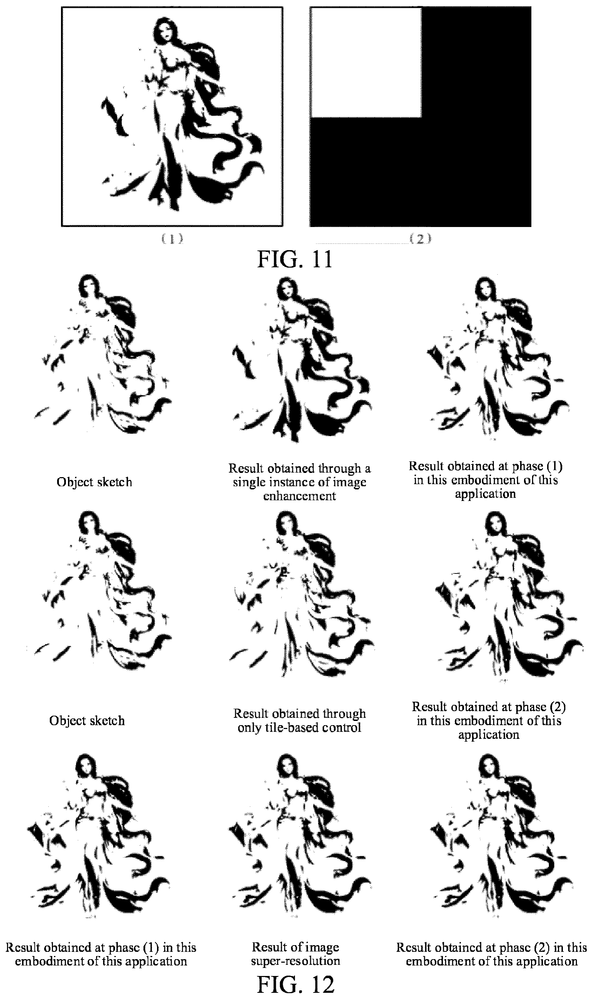

In an actual application, multi-tile serial image-to-image generation may be implemented through image inpainting. Specifically, each network input is a current refined image (as shown in (1) in FIG. 11) and a tile mask image (mask). As shown in (2) in FIG. 11, a white region in the mask represents a region corresponding to the input image, and is a tile on which refinement is currently to be performed. Image inpainting is the same as the image enhancement process at phase 1. After a tile is encoded into a latent by using an autoencoder, a specific quantity of steps of Gaussian noise may be added to generate a noisy latent map, and then denoising is performed by using a reverse diffusion process, to generate an enhanced tile. During image inpainting, to ensure that a black region in the mask does not change, a noisy latent predicted by the model in each operation of the denoising process is replaced with a co-level noisy latent in the noise adding process. After the current tile is inpainted, this location in the entire image is automatically updated, and participates in inpainting of a next tile. In an image inpainting process of each tile, tile-based control is used to locally generate new details for the image, and ensure consistency of an entire structure of the image. A network structure of a tile-based control branch is consistent with that of an object structural feature-based control branch at phase (1), but an input image of the tile-based control branch is replaced with the object super-resolution image.

There are a plurality of important hyperparameters at phase (2), including: the denoising intensity of the model, a tile-based control intensity (weight value), and a length and a width of a single tile. The tile-based control intensity is a weight ratio of tile-based control over fusion of a feature to the first decoder. A higher tile-based control intensity indicates a higher weight for tile-based control over fusion of the feature and more details to be added to the image. The length and the width of a single tile control an area processed during each instance of image inpainting. A smaller area indicates more details to be added through tile-based control of a same intensity. For example, values of the foregoing hyperparameters may be shown in the following Table 2, and in an actual application, may be further adjusted based on a requirement.

Table 2

| Parameter name | Denoising intensity | Tile-based control intensity | Length and width of the tile |
|---|---|---|---|
| Value | 0.2 | 0.5 | (H, W) (consistent with the size of the object image) |

Phase (3): Multi-size refinement policy: As a size of an image increases, information in data is increasingly redundant, and a task of denoising a large image under a same intensity becomes simpler. To be specific, for images of different sizes, output images change relative to input images to different extents under a same denoising intensity, and an image of a larger size changes less under the same intensity. Because degrees of image refinement of different images expected by a user are different, the multi-size refinement policy may be used. During specific implementation, an object sketch may be scaled based on different sizes (for example, 0.5 times, 1 time, or 2 times), and then object sketches of different sizes are inputted into the foregoing image refining procedure to obtain enhanced object images of different sizes, so that enhanced object images of a plurality of sizes can be returned to the user for selection. It is found during actual implementation that according to the embodiments of the present disclosure, more associations and details can usually be generated for a small image, and this is especially applicable to a case in which a completion degree of the object sketch is low; and a refinement result of a large image obtained according to the embodiments of the present disclosure is more loyal to an input image.

The embodiments of the present disclosure may be applied to various scenarios (for example, a game concept art design scenario, an animation or cartoon design scenario, or an advertisement design scenario), including refinement on object sketches, and different model parameters may be designed based on requirements of the scenarios. A human face appearing in the accompanying drawings provided in the embodiments of the present disclosure is a synthetic and non-real human face.

With the application of the foregoing embodiment of the present disclosure, the object sketch can be automatically rendered and refined with good image enhancement effects on a large area (for example, hair, clothes, and skin) in the object sketch. During actual implementation, this can help an art designer to quickly improve an object sketch from a completion degree of 30% to 40% to a completion degree of 80% or higher, greatly improving production efficiency of the designer. FIG. 12 is a schematic diagram of comparison between a group of object refinement results. It can be learned that: (1) A comparison between a result obtained at phase (1) in the embodiments of the present disclosure and a result obtained through a single instance of image enhancement shows that the result obtained at phase (1) in the embodiments of the present disclosure is more consistent with the original image (that is, the object sketch), including the hair, the clothes, the skin, and the like. (2) A comparison between a result obtained through only tile-based control and a result obtained at phase (2) in the embodiments of the present disclosure shows that a completion degree of refinement of the result obtained through only tile-based control is lower. (3) The result obtained at phase (1) can be an object image with a realistic material, but with low image quality. The image resolution of the result of image super-resolution at phase (2) is improved, but actually, when the result is enlarged, refinement degrees of local regions such as a face, a forehead, and eyes are actually inadequate, and local details such as hair tips and the right wrist are blurred. Completion degrees and quality of the local regions in the result obtained through tile-based control at phase (2) are directly improved.

The following continues to describe an exemplary structure in which the image enhancement apparatus 555 provided in an embodiment of the present disclosure is implemented as a software module. In some embodiments, as shown in FIG. 2, the software module in the image enhancement apparatus 555 stored in the memory 550 may include: the obtaining module 5551, configured to: obtain a latent variable of a to-be-enhanced object image, and add noise to the latent variable to obtain a noisy latent variable of the object image, the object image being an image of a target object; the extraction module 5552, configured to extract an object structural feature of the target object in the object image; the denoising module 5553, configured to denoise the noisy latent variable with reference to the object structural feature, to obtain a denoised latent variable of the object image; and the reconstruction module 5554, configured to perform image reconstruction on the denoised latent variable to obtain a first enhanced object image of the object image.

In some embodiments, the extraction module 5552 is further configured to: generate a depth map of the object image; perform object posture detection on the object image to obtain object posture information of the target object, and perform object line-drawing extraction on the object image to obtain object line-drawing information of the target object; fuse the depth map, the object posture information, and the object line-drawing information to obtain fused object structural information; and perform feature extraction on the fused object structural information to obtain the object structural feature.

In some embodiments, the process of feature extraction is implemented by using M first encoder blocks that are cascaded, M being an integer greater than 0. The extraction module 5552 is further configured to: invoke the $1^{st}$ first encoder block of the M first encoder blocks to encode the fused object structural information to obtain an object structural feature outputted by the $1^{st}$ first encoder block; invoke an $i^{th}$ first encoder block of the M first encoder blocks to encode an object structural feature outputted by an $(i-1)^{th}$ first encoder block, to obtain an object structural feature outputted by the $i^{th}$

first encoder block; and traverse i to obtain an object structural feature outputted by each of the M first encoder blocks, i being an integer greater than 0 and not greater than M.

In some embodiments, the process of denoising is implemented by using an image denoising model, the image denoising model includes a first encoder and a first decoder, the first decoder includes M first decoder blocks that are cascaded, and the first decoder blocks are in one-to-one correspondence with the first encoder blocks. The denoising module 5553 is further configured to: invoke the first encoder to encode the noisy latent variable to obtain an encoded latent variable; invoke an $M^{th}$ first decoder block of the M first decoder blocks to decode the encoded latent variable and an object structural feature outputted by an $M^{th}$ first encoder block, to obtain a decoded latent variable outputted by the $M^{th}$ first decoder block; invoke an $i^{th}$ first decoder block of the M first decoder blocks to decode a decoded latent variable outputted by an $(i+1)^{th}$ first decoder block and the object structural feature outputted by the $i^{th}$ first encoder block, to obtain a decoded latent variable outputted by the $i^{th}$ first decoder block; and traverse i to obtain a decoded latent variable outputted by the $1^{st}$ first decoder block of the M first decoder blocks, and use the decoded latent variable outputted by the $1^{st}$ first decoder block as the denoised latent variable.

In some embodiments, the denoising module 5553 is further configured to: perform, based on a first weight value of the encoded latent variable and a second weight value of the object structural feature outputted by the $M^{th}$ first encoder block, weighted summation on the encoded latent variable and the object structural feature outputted by the $M^{th}$ first encoder block, to obtain a first concatenated feature; and decode the first concatenated feature to obtain the decoded latent variable outputted by the $M^{th}$ first decoder block. The denoising module 5553 is further configured to: perform, based on a third weight value of the decoded latent variable outputted by the $(i+1)^{th}$ first decoder block and a fourth weight value of the object structural feature outputted by the $i^{th}$ first encoder block, weighted summation on the decoded latent variable outputted by the $(i+1)^{th}$ first decoder block and the object structural feature outputted by the $i^{th}$ first encoder block, to obtain a second concatenated feature; and decode the second concatenated feature to obtain the decoded latent variable outputted by the $i^{th}$ first decoder block.

In some embodiments, the first encoder includes P third encoder blocks that are cascaded, P being an integer greater than 0. The denoising module 5553 is further configured to: invoke the $1^{st}$ third encoder block of the P third encoder blocks to encode the noisy latent variable to obtain an encoding result outputted by the $1^{st}$ third encoder block; invoke a $p^{th}$ third encoder block of the P third encoder blocks to encode an encoding result outputted by a $(p-1)^{th}$ third encoder block, to obtain an encoding result outputted by the $p^{th}$ third encoder block; traverse p to obtain an encoding result outputted by a $P^{th}$ third encoder block, p being an integer greater than 0 and not greater than P; and use the encoding result outputted by the $P^{th}$ third encoder block as the encoded latent variable.

In some embodiments, the reconstruction module 5554 is further configured to: after performing image reconstruction on the denoised latent variable to obtain the first enhanced object image of the object image, obtain a target latent variable of the first enhanced object image, and add noise to the target latent variable to obtain a target noisy latent variable of the first enhanced object image; extract a target object structural feature of the target object in the first enhanced object image; denoise the target noisy latent variable with reference to the target object structural feature, to obtain a target denoised latent variable of the first enhanced object image; and perform image reconstruction on the target denoised latent variable to obtain a second enhanced object image of the object image.

In some embodiments, the reconstruction module 5554 is further configured to: after performing image reconstruction on the denoised latent variable to obtain the first enhanced object image of the object image, perform image super-resolution on the first enhanced object image to obtain an object super-resolution image; divide the object super-resolution image into a plurality of tiles; perform image enhancement separately on the tiles to obtain enhanced tiles of the tiles; and stitch the enhanced tiles to obtain a third enhanced object image of the object image.

In some embodiments, the reconstruction module 5554 is further configured to perform the following processing for each tile: add noise to a tile latent variable of the tile to obtain a noisy tile latent variable of the tile; perform feature extraction on the tile to obtain a tile feature of the tile; perform tile denoising on the noisy tile latent variable with reference to the tile feature, to obtain a denoised tile latent variable of the tile; and perform image reconstruction on the denoised tile latent variable to obtain the enhanced tile of the tile.

In some embodiments, the process of feature extraction is implemented by using N second encoder blocks that are cascaded, N being an integer greater than 0. The reconstruction module 5554 is further configured to: invoke the $1^{st}$ second encoder block of the N second encoder blocks to encode the tile to obtain a tile feature outputted by the $1^{st}$ second encoder block; invoke a $j^{th}$ second encoder block of the N second encoder blocks to encode a tile feature outputted by a $(j-1)^{th}$ second encoder block, to obtain a tile feature outputted by the $j^{th}$ second encoder block; and traverse j to obtain a tile feature outputted by each of the N second encoder blocks, j being an integer greater than 0 and not greater than N.

In some embodiments, the process of tile denoising is implemented by using an image denoising model, the image denoising model includes a second encoder and a second decoder, the second decoder includes N second decoder blocks that are cascaded, and the second decoder blocks are in one-to-one correspondence with the second encoder blocks. The denoising module 5553 is further configured to: invoke the second encoder to encode the noisy tile latent variable to obtain an encoded tile latent variable; perform weight value-based weighted summation on the encoded tile latent variable and a tile feature outputted by an $N^{th}$ second encoder block, to obtain a third concatenated feature, and invoke an $N^{th}$ second decoder block of the N second decoder blocks to decode the third concatenated feature to obtain a decoded tile latent variable outputted by the $N^{th}$ second decoder block; perform weight value-based weighted summation on a decoded tile latent variable outputted by a $(j+1)^{th}$ second decoder block and the tile feature outputted by the $j^{th}$ second encoder block, to obtain a fourth concatenated feature, and invoke a $j^{th}$ second decoder block of the N second decoder blocks to decode the fourth concatenated feature to obtain a decoded tile latent variable outputted by the $j^{th}$ second decoder block; and traverse j to obtain a decoded tile latent variable outputted by the $1^{st}$ second decoder block of the N second decoder blocks, and use the decoded tile latent variable outputted by the $1^{st}$ second decoder block as the denoised tile latent variable.

In some embodiments, the obtaining module 5551 is further configured to: before obtaining the latent variable of the to-be-enhanced object image, obtain a target image of the target object; perform size adjustment on the target image based on a plurality of different sizes, to obtain an adjusted image of each size; and use the adjusted image of each size as the object image.

In some embodiments, the obtaining module 5551 is further configured to encode the to-be-enhanced object image to obtain the latent variable. The reconstruction module 5554 is further configured to decode the denoised latent variable to obtain the first enhanced object image of the object image.

In some embodiments, denoising includes T instances of denoising, T being an integer greater than 0. The denoising module 5553 is further configured to: perform the $1^{st}$ instance of denoising on the noisy latent variable with reference to the object structural feature, to obtain an intermediate denoised latent variable outputted through the $1^{st}$ instance of denoising; perform, with reference to the object structural feature, a $t^{th}$ instance of denoising on an intermediate denoised latent variable outputted through a $(t-1)^{th}$ instance of denoising, to obtain an intermediate denoised latent variable outputted through the $t^{th}$ instance of denoising; and traverse t to obtain an intermediate denoised latent variable outputted through a $T^{th}$ instance of denoising, and use the intermediate denoised latent variable outputted through the $T^{th}$ instance of denoising as the denoised latent variable of the object image.

In some embodiments, the extraction module 5552 is further configured to: obtain at least one of the following object information of the target object in the object image: the depth map of the object image, the object posture information of the target object, and the object line-drawing information of the target object; and perform feature extraction on the object information to obtain the object structural feature.

The descriptions of the apparatus embodiment of the present disclosure are similar to the descriptions of the foregoing method embodiment. The apparatus embodiment has beneficial effects similar to those of the method embodiment, and details are not described herein again. Technical details not mentioned in the image enhancement apparatus provided in the embodiments of the present disclosure may be understood according to the descriptions of the technical details in the foregoing method embodiment.

An embodiment of the present disclosure further provides a computer program product. The computer program product includes computer-executable instructions or a computer program. The computer-executable instructions or the computer program is stored in a computer-readable storage medium. A processor of an electronic device reads the computer-executable instructions or the computer program from the computer-readable storage medium. The processor executes the computer-executable instructions or the computer program, so that the electronic device performs the image enhancement method provided in the embodiments of the present disclosure.

An embodiment of the present disclosure further provides a computer-readable storage medium. The computer-readable storage medium stores computer-executable instructions or a computer program. When the computer-executable instructions or the computer program is executed by a processor, the processor is caused to perform the image enhancement provided in the embodiments of the present disclosure.

In some embodiments, the computer-readable storage medium may be a memory such as a RAM, a ROM, a flash memory, a magnetic surface memory, an optical disc, or a CD-ROM, or may be various devices including one or any combination of the foregoing memories.

In some embodiments, the computer-executable instructions may be written in a form of a program, software, a software module, a script, or code in any form of programming language (including compilation or interpretation language, or declarative or procedural language), and may be deployed in any form, including being deployed as an independent program or being deployed as a module, component, subroutine, or another unit suitable for use in a computing environment.

In an example, the computer-executable instruction may but may not necessarily correspond to a file in a file system, may be stored in a part of the file for storing other programs or data, for example, stored in one or more scripts in a hypertext markup language (HTML) document, stored in a single file specially for the discussed program, or stored in a plurality of collaborative files (for example, files storing one or more modules, a subprogram, or a code part).

In an example, the computer-executable instructions may be deployed to be executed on one electronic device, on a plurality of electronic devices located at one site, or on a plurality of electronic devices distributed at a plurality of locations and connected by a communication network.

The foregoing descriptions are merely embodiments of the present disclosure and are not intended to limit the protection scope of the present disclosure. Any modification, equivalent replacement, or improvement made within the spirit and scope of the present disclosure falls within the protection scope of the present disclosure.

## Claims

1. An image enhancement method, executable by an electronic device, the method comprising:

    obtaining a latent variable of an object image comprising a first object;
    adding noise to the latent variable to obtain a noisy latent variable of the object image,
    obtaining an object structural feature of the first object from the object image;
    denoising the noisy latent variable with reference to the object structural feature, to obtain a denoised latent variable of the object image; and
    performing image reconstruction on the denoised latent variable to obtain a first enhanced object image of the object image.

2. The method according to claim 1, wherein the obtaining an object structural feature of the first object from the object image comprises:

    generating a depth map of the object image;
    performing object posture detection on the object image to obtain object posture information of the first object, and performing object line-drawing extraction on the object image to obtain object line-drawing information of the first object;
    fusing the depth map, the object posture information, and the object line-drawing information to obtain fused object structural information; and
    performing feature extraction on the fused object structural information to obtain the object structural feature.

3. The method according to claim 2, wherein the feature extraction is implemented by using M first encoder blocks that are cascaded, M being an integer greater than 0; and the performing feature extraction on the fused object structural information to obtain the object structural feature comprises:

    invoking an $1^{st}$ first encoder block of the M first encoder blocks to encode the fused object structural information to obtain an object structural feature outputted by the $1^{st}$ first encoder block;
    invoking an $i^{th}$ first encoder block of the M first encoder blocks to encode an object structural feature outputted by an $(i-1)^{th}$ first encoder block, to obtain an object structural feature outputted by the $i^{th}$ first encoder block; and
    traversing i to obtain an object structural feature outputted by each of the M first encoder blocks, i being an integer greater than 0 and not greater than M.

4. The method according to claim 3, wherein denoising is implemented by using an image denoising model, the image denoising model comprises a first encoder and a first decoder, the first decoder comprises M first decoder blocks that are cascaded, and the M first decoder blocks are in one-to-one correspondence with the M first encoder blocks; and the denoising the noisy latent variable with reference to the object structural feature, to obtain a denoised latent variable comprises:

    invoking the first encoder to encode the noisy latent variable to obtain an encoded latent variable;
    invoking an $M^{th}$ first decoder block of the M first decoder blocks to decode the encoded latent variable and an object structural feature outputted by an $M^{th}$ first encoder block, to obtain a decoded latent variable outputted by the $M^{th}$ first decoder block;
    invoking an $i^{th}$ first decoder block of the M first decoder blocks to decode a decoded latent variable outputted by an $(i+1)^{th}$ first decoder block and the object structural feature outputted by the $i^{th}$ first encoder block, to obtain a decoded latent variable outputted by the $i^{th}$ first decoder block; and
    traversing i to obtain a decoded latent variable outputted by an $1^{st}$ first decoder block of the M first decoder blocks, and using the decoded latent variable outputted by the $1^{st}$ first decoder block as the denoised latent variable.

5. The method according to claim 4, wherein the invoking an $M^{th}$ first decoder block of the M first decoder blocks to decode the encoded latent variable and an object structural feature outputted by an $M^{th}$ first encoder block, to obtain a decoded latent variable outputted by the $M^{th}$ first decoder block comprises:

performing, based on a first weight value of the encoded latent variable and a second weight value of the object structural feature outputted by the $M^{th}$ first encoder block, weighted summation on the encoded latent variable and the object structural feature outputted by the $M^{th}$ first encoder block, to obtain a first concatenated feature; and

decoding the first concatenated feature to obtain the decoded latent variable outputted by the $M^{th}$ first decoder block; and

the invoking an $i^{th}$ first decoder block of the M first decoder blocks to decode a decoded latent variable outputted by an $(i+1)^{th}$ first decoder block and the object structural feature outputted by the $i^{th}$ first encoder block, to obtain a decoded latent variable outputted by the $i^{th}$ first decoder block comprises:

performing, based on a third weight value of the decoded latent variable outputted by the $(i+1)^{th}$ first decoder block and a fourth weight value of the object structural feature outputted by the $i^{th}$ first encoder block, weighted summation on the decoded latent variable outputted by the $(i+1)^{th}$ first decoder block and the object structural feature outputted by the $i^{th}$ first encoder block, to obtain a second concatenated feature; and

decoding the second concatenated feature to obtain the decoded latent variable outputted by the $i^{th}$ first decoder block.

6. The method according to claim 5, wherein the first encoder comprises P third encoder blocks that are cascaded, P being an integer greater than 0; and the invoking the first encoder to encode the noisy latent variable to obtain an encoded latent variable comprises:

invoking an $1^{st}$ third encoder block of the P third encoder blocks to encode the noisy latent variable to obtain an encoding result outputted by the $1^{st}$ third encoder block;

invoking a $p^{th}$ third encoder block of the P third encoder blocks to encode an encoding result outputted by a $(p-1)^{th}$ third encoder block, to obtain an encoding result outputted by the $p^{th}$ third encoder block;

traversing p to obtain an encoding result outputted by a $P^{th}$ third encoder block, p being an integer greater than 0 and not greater than P; and

using the encoding result outputted by the $P^{th}$ third encoder block as the encoded latent variable.

7. The method according to any one of claims 1 to 6, wherein after the performing image reconstruction on the denoised latent variable to obtain a first enhanced object image of the object image, the method further comprises:

obtaining a target latent variable of the first enhanced object image, and adding noise to the target latent variable to obtain a target noisy latent variable of the first enhanced object image;

extracting a target object structural feature of the first object from the first enhanced object image;

denoising the target noisy latent variable with reference to the target object structural feature, to obtain a target denoised latent variable of the first enhanced object image; and

performing image reconstruction on the target denoised latent variable to obtain a second enhanced object image of the object image.

8. The method according to any one of claims 1 to 7, wherein after the performing image reconstruction on the denoised latent variable to obtain a first enhanced object image of the object image, the method further comprises:

performing image super-resolution on the first enhanced object image to obtain an object super-resolution image;

dividing the object super-resolution image into a plurality of tiles;

performing image enhancement separately on the plurality of tiles to obtain enhanced tiles; and

stitching the enhanced tiles to obtain a third enhanced object image of the object image.

9. The method according to claim 8, wherein the performing image enhancement separately on the plurality of tiles to obtain enhanced tiles comprises: for each tile,

adding noise to a tile latent variable of the tile to obtain a noisy tile latent variable of the tile;

performing feature extraction on the tile to obtain a tile feature of the tile;

performing tile denoising on the noisy tile latent variable with reference to the tile feature, to obtain a denoised tile latent variable of the tile; and

performing image reconstruction on the denoised tile latent variable to obtain the enhanced tile of the tile.

10. The method according to claim 9, wherein the feature extraction is implemented by using N second encoder blocks that are cascaded, N being an integer greater than 0; and the performing feature extraction on the tile to obtain a tile feature of the tile comprises:

invoking an $1^{st}$ second encoder block of the N second encoder blocks to encode the tile to obtain a tile feature outputted by the $1^{st}$ second encoder block;

invoking a $j^{th}$ second encoder block of the N second encoder blocks to encode a tile feature outputted by a $(j-1)^{th}$ second encoder block, to obtain a tile feature outputted by the $j^{th}$ second encoder block; and

traversing j to obtain a tile feature outputted by each of the N second encoder blocks, j being an integer greater than 0 and not greater than N.

11. The method according to claim 10, wherein the tile denoising is implemented by using an image denoising model, the image denoising model comprises a second encoder and a second decoder, the second decoder comprises N second decoder blocks that are cascaded, and the N second decoder blocks are in one-to-one correspondence with the N second encoder blocks; and

the performing tile denoising on the noisy tile latent variable with reference to the tile feature, to obtain a denoised tile latent variable of the tile comprises:

invoking the second encoder to encode the noisy tile latent variable to obtain an encoded tile latent variable;

performing weight value-based weighted summation on the encoded tile latent variable and a tile feature outputted by an $N^{th}$ second encoder block, to obtain a third concatenated feature, and

invoking an $N^{th}$ second decoder block of the N second decoder blocks to decode the third concatenated feature to obtain a decoded tile latent variable outputted by the $N^{th}$ second decoder block;

performing weight value-based weighted summation on a decoded tile latent variable outputted by a $(j+1)^{th}$ second decoder block and the tile feature outputted by the $j^{th}$ second encoder block, to obtain a fourth concatenated feature, and

invoking a $j^{th}$ second decoder block of the N second decoder blocks to decode the fourth concatenated feature to obtain a decoded tile latent variable outputted by the $j^{th}$ second decoder block; and

traversing j to obtain a decoded tile latent variable outputted by the $1^{st}$ second decoder block of the N second decoder blocks, and using the decoded tile latent variable outputted by the $1^{st}$ second decoder block as the denoised tile latent variable.

12. The method according to any one of claims 1 to 11, wherein before the obtaining a latent variable of an object image, the method further comprises:

obtaining a first image of the first object;

performing size adjustment on the first image based on a plurality of different sizes, to obtain an adjusted image of each size; and

using the adjusted image of each size as the object image.

13. The method according to any one of claims 1 to 12, wherein

the obtaining a latent variable of an object image comprises: encoding the object image to obtain the latent variable; and

the performing image reconstruction on the denoised latent variable to obtain a first enhanced object image of the object image comprises: decoding the denoised latent variable to obtain the first enhanced object image of the object image.

14. The method according to any one of claims 1 to 13, wherein denoising comprises T instances of denoising, T being an integer greater than 0; and the denoising the noisy latent variable with reference to the object structural feature, to obtain a denoised latent variable of the object image comprises:

performing an $1^{st}$ instance of denoising on the noisy latent variable with reference to the object structural feature, to obtain an intermediate denoised latent variable outputted through the $1^{st}$ instance of denoising;

performing, with reference to the object structural feature, a $t^{th}$ instance of denoising on an intermediate denoised latent variable outputted through a $(t-1)^{th}$ instance of denoising, to obtain an intermediate denoised latent variable outputted through the $t^{th}$ instance of denoising; and

traversing t to obtain an intermediate denoised latent variable outputted through a $T^{th}$ instance of denoising, and using the intermediate denoised latent variable outputted through the $T^{th}$ instance of denoising as the denoised latent variable of the object image.

15. The method according to any one of claims 1 to 14, wherein the obtaining an object structural feature of the first object from the object image comprises:

obtaining at least one of object information of the first object in the object image, wherein the object information comprises a depth map of the object image, object posture information of the first object, and object line-drawing information of the first object; and
performing feature extraction on the object information to obtain the object structural feature.

16. An image enhancement apparatus, the apparatus comprising:

an obtaining module, configured to: obtain a latent variable of an object image comprising a first object, and add noise to the latent variable to obtain a noisy latent variable of the object image;
an extraction module, configured to extract an object structural feature of the first object from the object image;
a denoising module, configured to denoise the noisy latent variable with reference to the object structural feature, to obtain a denoised latent variable of the object image; and
a reconstruction module, configured to perform image reconstruction on the denoised latent variable to obtain a first enhanced object image of the object image.

17. An electronic device, comprising:

a memory, configured to store computer-executable instructions; and
a processor, configured to implement the image enhancement method according to any one of claims 1 to 15 when executing the computer-executable instructions stored in the memory.

18. A computer-readable storage medium, having computer-executable instructions or a computer program stored therein, the computer-executable instructions or the computer program, when executed by a processor, causing the image enhancement method according to any one of claims 1 to 15 to be implemented.

19. A computer program product, comprising computer-executable instructions or a computer program, the computer-executable instructions or the computer program, when executed by a processor, causing the image enhancement method according to any one of claims 1 to 15 to be implemented.

100

3: Perform image enhancement on an object image in response to the image enhancement request, to obtain an enhanced object image

Server 200

2: Image enhancem ent request

Network 300

4: Return the enhanced object image

5: Display the enhanced object image

400-1

1: Image enhancement instruction

FIG. 1

Electronic device 500

Memory 550

| Operating system |
| Network communication module |
| Presentation module |
| Input processing module |
| Image enhancement apparatus 555 |

Network interface 520

Processor 510

540

User interface 530

Output apparatus

Input apparatus

Image enhancement apparatus 555

| Obtaining module 5551 |
| Extraction module 5552 |
| Denoising module 5553 |
| Reconstruction module 5554 |

## FIG. 2

Obtain a latent variable of a to-be-enhanced object image, and add noise to the latent variable to obtain a noisy latent variable of the object image —101

Obtain an object structural feature of a target object from the object image —102

Denoise the noisy latent variable with reference to the object structural feature, to obtain a denoised latent variable of the object image —103

Perform image reconstruction on the denoised latent variable to obtain a first enhanced object image of the object image —104

## FIG. 3

Generate a depth map of an object image — 1021

Perform object posture detection on the object image to obtain object posture information of a target object, and perform object line-drawing extraction on the object image to obtain object line-drawing information of the target object — 1022

Fuse the depth map, the object posture information, and the object line-drawing information to obtain fused object structural information — 1023

Perform feature extraction on the fused object structural information to obtain an object structural feature — 1024

## FIG. 4

Encoder    Decoder

Depth map

Object line-drawing information

Object posture information

Skip connection

Skip connection

Skip connection

Skip connection

Fused object structural information

➡ 3*3 conv(s=1)+relu

⇩ 3*3 conv(s=2)+relu

⇧ 3*3 conv(s=1)+relu+upsample

## FIG. 5

FIG. 6

FIG. 7

FIG. 8

FIG. 9

(1) Generator

(2) Discriminator

FIG. 10

FIG. 11

Object sketch

Result obtained through a single instance of image enhancement

Result obtained at phase (1) in this embodiment of this application

Object sketch

Result obtained through only tile-based control

Result obtained at phase (2) in this embodiment of this application

Result obtained at phase (1) in this embodiment of this application

Result of image super-resolution

Result obtained at phase (2) in this embodiment of this application

FIG. 12

## INTERNATIONAL SEARCH REPORT

| International application No. |
|---|
| **PCT/CN2024/099588** |

### A. CLASSIFICATION OF SUBJECT MATTER

G06T5/00(2024.01)i

According to International Patent Classification (IPC) or to both national classification and IPC

### B. FIELDS SEARCHED

Minimum documentation searched (classification system followed by classification symbols)

IPC:G06T

Documentation searched other than minimum documentation to the extent that such documents are included in the fields searched

Electronic data base consulted during the international search (name of data base and, where practicable, search terms used)

VEN, CNTXT, CNABS, USTXT, WOTXT, CNKI, IEEE: 图像, 增强, 隐变量, 下采样, 降采样, 噪声, 结构, 轮廓, 姿态, 姿势, 重建, 超分辨率, 去噪, image, enhance+, hidden variables, down sampling, noise, structure, contour, pose, reconstruct+, super-resolution, SR, de-noising

### C. DOCUMENTS CONSIDERED TO BE RELEVANT

| Category* | Citation of document, with indication, where appropriate, of the relevant passages | Relevant to claim No. |
|---|---|---|
| PX | CN 117115023 A (TENCENT TECHNOLOGY (SHENZHEN) CO., LTD.) 24 November 2023 (2023-11-24)<br>claims 1-17, and description, paragraphs 71 and 85 | 1-19 |
| Y | CN 113592965 A (GUANGDONG OPPO MOBILE COMMUNICATIONS CO., LTD.) 02 November 2021 (2021-11-02)<br>description, paragraphs 65-130 | 1, 7, 12, 13, 15-19 |
| Y | US 2022261960 A1 (TENCENT TECHNOLOGY (SHENZHEN) CO., LTD.) 18 August 2022 (2022-08-18)<br>description, paragraphs 59-67 | 1, 7, 12, 13, 15-19 |
| A | CN 116012266 A (UNIVERSITY OF SCIENCE AND TECHNOLOGY OF CHINA) 25 April 2023 (2023-04-25)<br>entire document | 1-19 |
| A | US 2022286696 A1 (SAMSUNG ELECTRONICS CO., LTD.) 08 September 2022 (2022-09-08)<br>entire document | 1-19 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **05 September 2024** | **23 September 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/099588**

| Patent document cited in search report | | | Publication date (day/month/year) | Patent family member(s) | | | Publication date (day/month/year) |
|---|---|---|---|---|---|---|---|
| CN | 117115023 | A | 24 November 2023 | None | | | |
| CN | 113592965 | A | 02 November 2021 | None | | | |
| US | 2022261960 | A1 | 18 August 2022 | JP | 2023508512 | A | 02 March 2023 |
| | | | | WO | 2021233008 | A1 | 25 November 2021 |
| | | | | CN | 111340711 | A | 26 June 2020 |
| | | | | HK | 40023723 | A0 | 04 December 2020 |
| CN | 116012266 | A | 25 April 2023 | None | | | |
| US | 2022286696 | A1 | 08 September 2022 | KR | 20220124622 | A | 14 September 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023110586437